# EUROPEAN PATENT SPECIFICATION

(11) **EP 4 252 209 B1**
(45) Date of publication and mention of the grant of the patent: **28.01.2026**
(21) Application number: 21827688.9
(22) Date of filing: 25.11.2021
(51) Int. Cl.: G08B 13/191, G08B 13/196

(54) **MONITORING SYSTEM COMPONENT**
ÜBERWACHUNGSSYSTEMKOMPONENTE
COMPOSANT DE SYSTÈME DE SURVEILLANCE

(30) Priority: 25.11.2020 GB 202018539
(43) Date of publication of application: 04.10.2023
(73) Proprietor: Essence Security International (E.S.I.) Ltd., 4672530 Herzlia Pituach (IL)
(72) Inventor: VENDRIGER, Eran, 6912208 Tel-Aviv (IL); COHEN, Eran, 6908712 Tel-Aviv (IL); MERON, Sergey, 4207829 Netanya (IL); AMIR, Ohad, 4642300 Herzlia (IL)
(74) Representative: Marks & Clerk LLP
(86) International application number: PCT/IL2021/051404
(87) International publication number: WO 2022/113076

(56) References cited:
- US-A- 4 250 498
- US-B2- 10 282 980
- US-B2- 9 554 201

## Description

### Technical field

The present disclosure relates to an infrared-detecting component for use in a monitoring system, such as but not limited to a security monitoring system for premises. The component is mountable to an external surface such as a wall, ceiling or other surface.

### Background

Systems for monitoring presence in a detection zone, such as security monitoring systems for monitoring premises, often have a plurality of components mounted on external surfaces, such as walls, ceilings, or door or window frames of the premises being monitored. Examples of such components include PIR units or other presence or motion detector units, open/close sensors for detecting the opening and closing of doors or windows, push button units such as panic buttons and key code entry pads, units for communicating with a wireless identifier fob, or the like.

Different components are often mounted to different surfaces. For example, a component such as a wide angle PIR unit for detecting presence or motion in a room can be mounted to a wall at the transition between two walls at a corner of a room so that a central sensing axis of the PIR unit faces generally at 45° from the walls. A component such as a curtain PIR unit for detecting an entity passing through a doorway or along a corridor or passage, is often mounted to a ceiling or on a vertical wall above a door so that a central sensing axis of the PIR unit faces generally downward. However, these examples are not restrictive and it will be appreciated that the above components could be mounted to different surfaces and/or at different angles, depending on the application.

US4250498 describes a light barrier transmitter/receiver with a housing connected to a mounting bracket via a securing bolt. The housing comprises a base part that defines one large area wall thereof and cover parts that define a second large area wall thereof. The base and cover parts are respectively provided with cooperating side walls which meet at a line defining a split line for the housing. The optical part of the arrangement comprises a transmitting lens which transmits light from an associated light source towards a retroreflector and the light beam reflected from the retroreflector is received by receiving lens and concentrated on an associated photodetector. The mounting bracket has a shallow elongate form and extends downwardly from the securing bolt beyond the outer border of the housing where it has an angular extension that extends along the narrow side of the housing. Various fastening bores are provided in the extension. The spacing of the extension from the narrow side of the housing is sufficiently large that the holder can be pivoted almost completely around the housing. Solely the upper right hand corner and the supply cable that is introduced through a cut off corner of the housing limit the range of pivotal movement of the holder.

### Summary

The invention is defined by claim 1. Preferred features are described by the dependent claims.

With this arrangement, a number of mounting angles of the component with respect to an external surface may be possible. This may improve installation and manufacture convenience. The ability to mount components on different surfaces and at different orientations may be beneficial. For example, if a component is intended to be mounted to a certain surface with a certain sensing angle but the installer changes their mind and wishes to install it on a different surface and/or with a different sensing angle, then an entirely new component might be needed. In addition, manufacture may be made more complicated as a large amount of different stock and tooling may be required to produce an entire range of components for different sensing angles and/or mounting surfaces. However, with the present component, the installer and manufacturer may not need to carry a wide range of differently configured stock of components and the installer may have more freedom in installing the component to provide a desired sensing input angle or direction.
The mounting component has an asymmetric cross sectional profile through the third face and the first and second lateral faces. The first and second lateral faces may be mirror asymmetric and may not be mirror images of each other.

The first lateral face is planar. The second lateral face is planar. The third lateral face is planar. The first lateral face may be is angled at an interior angle in a range from 85° to 95° from the third face. The first lateral face may be arranged substantially perpendicular to the third face.

The mounting component may be rigid. The first lateral face, the second lateral face and the third face may be fixedly arranged or otherwise immobile with respect to each other. The first lateral face, the second lateral face and the third face may be rigidly arranged with respect to each other.

The second lateral face may be non-perpendicular to the third face. The second face may be angled at an interior angle in a range from 110° to 160°, e.g. from 125° to 145⁰, such as at substantially 135° from the third face.

The first and second lateral faces may extend from the third face towards the housing, in use. The first and second lateral faces may form a majority part of the respective lateral opposing lateral outer surfaces of the component. The first and second lateral faces may form at least 60% or at least 75% of the respective lateral opposing lateral outer surfaces of the component.
Any of a group consisting of: the first lateral face, the second lateral face and the third face of the mounting component may be able to be a mounting surface that faces a planar external surface in a parallel manner when the component is mounted on the external surface. As will be appreciated, the term 'consisting' as used in such a sentence does not preclude the possibility of further elements additionally meeting this requirement laid out in that sentence. For example, faces that are not part of this group may also be able to be such mounting surfaces. At least one of a group consisting of: the first lateral face, the second lateral face and the third face of the mounting component may comprise one or more arrangements for receiving a fixing, such as a screw or bolt. For example, the arrangements for receiving a fixing may comprise a recess or thin wall portion of a wall of the mounting component that forms at least one of a group consisting of: the first lateral face, the second lateral face and the third face of the mounting component. In this way, the arrangements for receiving a fixing may comprise designated locations for receiving a fixing and may be configured to assist in the driving through of a fixing such as a self-tapping screw but may remain closed sealed until the fixing is driven through. At least one of a group consisting of: the first lateral face, the second lateral face and the third face of the mounting component may comprise an adhesive for adhering the component to the external surface. The adhesive may comprise a double sided adhesive pad or tape, contact adhesive, adhesive resin and/or the like. The adhesive may be at least partially covered by a removable release liner. The adhesive may cover a majority, at least 75% or substantively all of the surface of one or more or each of a group consisting of: the first lateral face, the second lateral face and the third face. A surface area of at least one of a group consisting of: the first lateral face, the second lateral face and/or the third face of the mounting component that is covered with the adhesive may be sufficient for the adhesive to adhere to the external surface so as to hold the weight of the component.

The component may be fixable in place on the external surface by providing the mounting component separate from the housing, fixing the mounting component in place on the external surface, e.g. using the fixings or the adhesive, and then subsequently fixing the housing to the mounting component.

The component may be elongate. The mounting component and optionally the housing are elongate. The first lateral face is elongate and has a long dimension that extends in parallel with a long dimension of the mounting component. The second lateral face is elongate and has a long dimension that extends in parallel with a long dimension of the mounting component. The long dimension of the second
lateral face may extend in parallel with the long dimension of the first lateral face. The lateral direction referred to herein may be a direction that is perpendicular to at least one or each of: the long dimension of the component, the long dimension of the mounting component, the long dimension of the first lateral surface and the long dimension of the second lateral surface. The asymmetric cross sectional profile through the third face and the first and second lateral faces may be a lateral cross section through the component, e.g. a cross section in a direction that is perpendicular to at least one or each of: the long dimension of the component, the long dimension of the mounting component, the long dimension of the first lateral surface and the long dimension of the second lateral surface. In some examples, the component may be configured such that the long dimension of the component extends substantially vertically, in use.

The component may be battery powered or capable of being powered by batteries. The component may be configured to accommodate at least one battery for powering the component. The at least one battery may be elongate. The component may be configured to accommodate at least one battery such that a long dimension of the at least one battery extends in parallel with one or more or each of a group consisting of: the long axis of the component, the long axis of the mounting component, the long axis of the first lateral face and/or the long axis of the second lateral face.

The housing and the mounting component may together define a cavity. The component may comprise an internal assembly. The internal assembly may be configured to hold at least one of: the operating module and/or the at least one battery. The internal assembly may be comprised within the cavity. The mounting component and/or the housing may be configured to receive at least part of the internal assembly therewithin. The cavity may be configured to receive the at least one battery. The internal assembly may comprise a battery holding part for engaging and holding the at least one battery. The internal assembly may be coupled to the housing, e.g. so as to be removable from the mounting component by removing the housing from the mounting component. The internal assembly may be coupled to the housing so that at least one of: the operating module and/or the battery holding part are removable from the mounting component by removing the housing from the mounting component. The mounting component may define a recess, which may be arranged so as to form at least part of the cavity when the housing is attached to the mounting component. The first and second lateral faces and the third face may be comprised in external surfaces of walls of the mounting component. The recess of the mounting component may be defined by internal surfaces of the walls of the mounting component in which the first and second lateral faces and the third face are comprised.

The mounting component and the housing may be rearrangeable relative to each other such that the relative positions of the first and second lateral faces are reversible. In this way, the orientation of the housing and thereby the operating module may be changeable, e.g. to suit the use of differently angled mounting surfaces of the mounting component and/or different applications of the component.

The mounting component may define an interface surface that abuts a corresponding interface surface of the housing, in use. The interface surface of the mounting component and the corresponding interface surface of the housing may each be symmetrical, e.g. to thereby enable the relative positions of the first and second lateral faces to be reversed. The interface surface of the mounting component may be on an opposite side of the mounting component to the third face. The interface surface of the mounting component may be at least partly defined by distal ends of the first lateral face and the second lateral face.

The interface surface of the mounting component may be symmetric, e.g. may have mirror symmetry. The interface portion may be rectangular or rectangular but for radiused corners when viewed in a plan view.

The asymmetric cross sectional profile through the third face and the first and second lateral faces may be a lateral cross section through the component, e.g. a cross section in a direction that is perpendicular to at least one or each of: the long dimension of the component, the long axis of the mounting component, the long dimension of the first lateral surface and the long dimension of the second lateral surface.

The housing may be selectively attachable and detachable from the mounting component. The housing may be attachable to the mounting component by interference fit, friction fit, inter-engaging members that selectively engage with corresponding recesses, or some other suitable selectively releasable attaching mechanism. In this way, the component may be easy to assemble and may make it easier to interchange internal components. In addition, this arrangement may allow a common mounting component to be used with different housings. This may provide for ease of installation and/or manufacture. This arrangement may provide for easier changing of the at least one battery by removing the housing to thereby gain access to the at least one battery, changing the at least one battery and then re-attaching the housing to the mounting component. The mounting component may be configured such that it can be left in place throughout whilst the battery is being changed.

The environmental input comprises infra-red radiation. The environmental input comprises passive infra-red radiation emitted from entities. The environmental input may comprise a tactile input, such as a button press. The environmental input may comprise a magnetic field or change in magnetic field.

The component comprises a passive infra-red (PIR) detector, such as a PIR motion or presence detector for detecting motion or presence of a living entity. The operating module may comprise a lens. The lens may be a Fresnel lens or comprise a Fresnel lens array. The operating module may comprise a circuit upon which the PIR detector is mounted. The circuit may comprise control electronics for controlling the PIR detector. The control electronics may comprise a processor. The control electronics may comprise a memory or other data storage. The lens may at least partly define a sensing area of the PIR detector. The operating module may comprise a mask for masking a portion of the lens and/or at least part of the field of view of the PIR detector, e.g. to at least partly define the sensing area of the PIR detector. The mask and/or the lens may be examples of field of view defining elements that at least partly define the field of view of the PIR detector. One or more of a group consisting of: the lens, the mask and/or the circuit board may be selectively fixable to, and releasable from, the housing.

The PIR detector may comprise a curtain PIR detector or a wide angle PIR detector. The curtain PIR detector may have a different, e.g. a narrower, field of view in at least one dimension relative to the wide angle PIR. The curtain PIR detector may have an elongated and/or longitudinally extending field of view. The field of view of the curtain PIR may be subtended by an angle of less than 20° (e.g. about 10 degrees) in a first direction but may be subtended by a greater angle in a second direction that is perpendicular to the first direction, e.g. an angle of 65⁰ or greater or 90° or greater. The field of view of the wide angle PIR detector may be subtended by angles of over 20⁰, over 40° or 50° or greater in every direction, e.g. subtended by angles in a range from 60° to 130°, e.g. in a range from 100° to 120° in every direction. In examples, the field of view of the wide angle PIR detector in a vertical direction in use may be subtended by an angle that is less than an angle that subtends the field of view of the wide angle PIR detector in a horizontal direction in use. For example, the field of view of the wide angle PIR detector in the vertical direction in use may be subtended by an angle of 40° or more and the field of view of the wide angle PIR detector in the horizontal direction in use may be subtended by an angle of 50⁰ or more. The curtain PIR may be configured for detecting motion of a living entity through an opening such as a door or window, or through a corridor or passageway. The wide angle PIR may be configured for detecting motion or presence of a living entity in an area of a premises, such as in a room.

The operating module may comprise at least one push button and button operating mechanism. The operating module may comprise an open/close detector, e.g. for detecting an opening or closing operation, such as opening or closing of a movable member, such as a door or window. The open/close detector may comprise one or more from a group consisting of: a magnetic sensor, an accelerometer, an optical sensor, an electromagnetic sensor and/or the like. For example, the open/close detector may comprise a magnetic sensor configured to determine a magnetic field associated with the presence of a corresponding magnet and to output an opening/closing event responsive to changes in the determined magnetic field.

However, the operating module is not limited to these examples and may comprise, for example, a thermal imaging module, a magnetic or electromagnetic field sensor, an audio sensor, a vibration sensor or accelerometer, a gyroscopic sensor and/or the like.

The housing may define an aperture, such as a circular aperture. The button or the lens and optionally also the mask may be received in the aperture. The aperture may be provided on an opposite side of the component to the third face of the mounting component.

The operating module may be interchangeable with the same housing or by interchanging the housing and operating module. The component may be reconfigurable between comprising a curtain PIR detector and comprising a wide angle PIR detector, e.g. by one or both of: interchanging the at least one field of view defining element, such as the lens and/or the housing, or interchanging the operating module. Curtain PIR detectors are typically mounted at different angles to wide angle PIR detectors. For example, curtain PIR detectors may be mounted to a ceiling so that a central sensing axis of the PIR detector is generally perpendicularly to the ceiling or mounted on a vertical surface such as a wall so that the central sensing axis central sensing axis of the PIR detector is generally in parallel with the vertical surface. Wide angle PIR detectors may be mounted at the junction of two walls so that the central sensing axis of the PIR detector is obliquely angled (e.g. at 45°) to the walls or mounted on a vertical surface so that the central sensing axis of the wide angle PIR detector is generally perpendicularly to the vertical surface. By providing the mounting component having first and second lateral faces that form at least part of respective opposing lateral outer surfaces of the component and are provided at different angles with respect to a third face of the mounting component so as to be asymmetrically arranged with respect to the third face, the third face forming at least part of a rear outer surface of the component, all of these mounting arrangements may be accommodated using the same mounting component by selectively mounting the first face, second face or third face to the wall or ceiling as appropriate.

The component may comprise a communications system. The communications system may be configured to communicate with a processing system. The communications system may be configured to communicate outputs of the operating modules of the one or more components. The processing system may be configured to receive and process the outputs of the operating modules of the one or more components transmitted by the communications system in order to determine at least one of: the presence, motion or action of an entity.

The communications system may be a wireless communications system configured to communicate using wireless communications. The communications system may be a wired communications system configured to communicate over electrical or optical or other tangible cables.

At least part of the communications system may be comprised in the circuit. The communications system may comprise an antenna, and at least one processing resource, which may comprise a processor, digital signal processor (DSP), field programmable gate array (FPGA), application specific integrated circuit (ASIC) or the like.

A second example of the present disclosure, provided only to help understanding of the present disclosure and not within the scope of the invention as defined by the claims, provides a kit of parts or assembly for a component of a monitoring or security system. The kit or assembly may comprise a housing for housing an operating module of the monitoring or security system. The kit or assembly may comprise a mounting component for mounting the component and supporting the housing. The housing may be selectively attachable to, and detachable from, the mounting component. The mounting component comprises first and second lateral faces that respectively form at least part of opposing outer sides of the mounting component and are provided at different angles with respect to a third face of the mounting component so as to be asymmetrically arranged with respect to the third face. The third face may form at least part of a rear outer surface of the component.

The component may be the component of the invention.

The mounting component may have an asymmetric cross sectional profile through the third face and the first and second lateral faces. The first and second lateral faces may be mirror asymmetric and may not be mirror images of each other.

The first lateral face is planar. The second lateral face is planar. The third lateral face is planar. The first lateral face may be angled between 85° and 95° with respect to the third face. The first lateral face may be arranged substantially perpendicular to the third face.

The second lateral face may be non-perpendicular to the third face. The second face may be angled at an angle in a range from 110⁰ to 160⁰, e.g. from 125° to 145⁰, such as at substantially 135° from the third face.

The mounting component may be rigid. The first lateral face, the second lateral face and the third face may be fixedly arranged or otherwise immobile with respect to each other. The first lateral face, the second lateral face and the third face may be rigidly arranged with respect to each other. The first and second lateral faces may extend from the third face towards the housing, in use. The first and second lateral faces may form a majority part of the respective lateral opposing lateral outer surfaces of the component. The first and second lateral faces may form at least 60% or at least 75% of the respective lateral opposing lateral outer surfaces of the component.

Any of a group consisting of: the first lateral face, the second lateral face and the third face of the mounting component may be able to be a mounting surface that faces a planar external surface in a parallel manner when the component is mounted on the external surface. At least one of a group consisting of: the first lateral face, the second lateral face and the third face of the mounting component may comprise one or more arrangements for receiving a fixing, such as a screw or bolt. For example, the arrangements for receiving a fixing may comprise a recess or thin wall portion of a wall of the mounting component that forms at least one of a group consisting of: the first lateral face, the second lateral face and/or the third face of the mounting component. At least one of a group consisting of: the first lateral face, the second lateral face and the third face of the mounting component may comprise an adhesive for adhering the component to the external surface. The adhesive may comprise a double sided adhesive pad or tape, contact adhesive, adhesive resin and/or the like. The adhesive may be at least partially covered by a removable release liner. The adhesive may cover a majority, at least 75% or substantively all of the surface of one or more or each of a group consisting of: the first lateral face, the second lateral face and/or the third face. A surface area of at least one of a group consisting of: the first lateral face, the second lateral face and the third face of the mounting component that is covered with the adhesive may be sufficient for the adhesive to adhere to the external surface so as to hold the weight of the assembled component.

The component may be assembled from the kit of parts and fixable in place on the external surface by providing the mounting component separate from the housing, fixing the mounting component in place on the external surface, e.g. using the fixings or the adhesive, and then subsequently fixing the housing to the mounting component.

The housing may be elongate. The first lateral face is elongate and has a long dimension that extends in parallel with a long dimension of the mounting component. The second lateral face is elongate and has a long dimension that extends in parallel with a long dimension of the mounting component. The long dimension of the second lateral face may extend in parallel with the long dimension of the first lateral face. The lateral direction referred to herein may be a direction that is perpendicular to at least one or each of: the long dimension of the component, the long dimension of the mounting component, the long dimension of the first lateral surface and the long dimension of the second lateral surface. In some examples, the component may be configured such that the long dimension of the component extends substantially vertically, in use.

The operating module may be battery powered or capable of being powered by batteries. The component may be configured to accommodate at least one battery for powering the operating module. The at least one battery may be elongate. The component may be configured to accommodate at least one battery such that a long dimension of the at least one battery extends in parallel with one or more or each of a group consisting of: the long axis of the mounting component, the long axis of the first lateral face and/or the long axis of the second lateral face.

The kit of parts may comprise an internal assembly, which may be configured to be internal in the component when the component has been assembled from the kit of parts. The internal assembly may be configured to hold at least one of: the operating module and/or the at least one battery. The internal assembly may comprise a battery holding part for engaging and holding the at least one battery. The internal assembly may be coupled to, or configured to couple to, the housing, e.g. so as to be removable from the mounting component by removing the housing from the mount. The mounting component may be configured to receive at least part of the internal assembly therewithin. The housing and the mounting component may together define a cavity that contains the internal assembly when the component has been assembled from the kit of parts. The mounting component may define a recess, which may be arranged so as to form at least part of the cavity when the housing is attached to the mounting component. The first and second lateral faces and the third face may be comprised in external surfaces of walls of the mounting component. The recess of the mounting component may be defined by internal surfaces of the walls of the mounting component in which the first and second lateral faces and the third face are comprised.

The mounting component and the housing may be rearrangeable relative to each other such that the relative positions of the first and second lateral faces are reversible.

The mounting component may define an interface surface that abuts a corresponding interface surface of the housing, in use. The interface surface of the mounting component and the corresponding interface surface of the housing may each be symmetrical, e.g. to thereby enable the relative positions of the first and second lateral faces to be reversed. The interface surface of the mounting component may be on an opposite side of the mounting component to the third face. The interface surface of the mounting component may be at least partly defined by distal ends of the first lateral face and the second lateral face.
The interface surface of the mounting component may be symmetric, e.g. may have mirror symmetry. The interface portion may be rectangular or rectangular but for radiused corners when viewed in a plan view.

The asymmetric cross sectional profile through the third face and the first and second lateral faces of the mounting component may be a lateral cross section through the component, e.g. a cross section in a direction that is perpendicular to at least one or each of: the long dimension of the component, the long axis of the mounting component, the long dimension of the first lateral surface and the long dimension of the second lateral surface. The housing may be configured to be selectively attachable and detachable from the mounting component. The housing may be attachable to the mounting component by an interference fit, by inter-engaging members that selectively engage with corresponding recesses, or some other suitable selectively releasable attaching mechanism.

The component comprises a passive infra-red (PIR) detector, such as a PIR motion or presence detector for detecting motion or presence of a living entity. The kit of parts may comprise a lens for the PIR detector. The lens may be a Fresnel lens or may comprise a Fresnel lens array. The kit of parts may comprise a circuit upon which the PIR detector is mounted. The circuit may comprise control electronics for controlling the PIR detector. The lens may at least partly define a sensing area of the PIR detector.

The kit of parts may comprise a mask for masking a portion of the lens and/or at least part of the field of view of the PIR detector, e.g. to at least partly define the sensing area of the PIR detector. The mask and/or the lens may be examples of field of view defining elements that at least partly define the field of view of the PIR detector. One or more of a group consisting of: the lens, the mask and/or the circuit board may be selectively fixable to, and releasable from, the housing.

The PIR detector may comprise a curtain PIR detector or a wide angle PIR detector.

The operating module may comprise at least one push button and button operating mechanism. The operating module may comprise an open/close detector, e.g. for detecting an opening or closing operation, such as opening or closing of a movable member, at a potential entry point such as a door or window. The open/close detector may comprise one or more from a group consisting of: a magnetic sensor, an accelerometer, an optical sensor, an electromagnetic sensor and/or the like. For example, the open/close detector may comprise a magnetic sensor configured to determine a magnetic field associated with the presence of a corresponding magnet and to output an opening/closing event responsive to changes in the determined magnetic field.

The housing may define an aperture, such as a circular aperture. The button or the lens and optionally also the mask may be received in the aperture. The aperture may be provided on an opposite side of the component to the third face of the mounting component.

The operating module may be interchangeable with the same housing or by interchanging the housing and operating module. The component may be reconfigurable between comprising a curtain PIR detector and comprising a wide angle PIR detector, e.g. by one or both of: interchanging the at least one field of view defining element, such as the lens and/or the housing, or interchanging the operating module.

A third example of the present disclosure, provided only to help understanding of the present disclosure and not within the scope of the invention as defined by the claims, provides a mounting component for mounting to an external surface and to support the component. The mounting component comprises first and second lateral faces that respectively form at least part of opposing outer lateral sides of the mounting component and are provided at different angles with respect to a third face of the mounting component so as to be asymmetrically arranged with respect to the third face, the third face forming at least part of a rear outer surface of the component.

The mounting component may have an asymmetric cross sectional profile through the third face and the first and second lateral faces. The first and second lateral faces may be mirror asymmetric and may not be mirror images of each other.

The first lateral face is planar. The second lateral face is planar. The third lateral face is planar. The first lateral face may be angled between 85° and 95° with respect to the third face. The first lateral face may be arranged substantially perpendicular to the third face. The mounting component may be rigid. The first lateral face, the second lateral face and the third face may be fixedly arranged or otherwise immobile with respect to each other. The first lateral face, the second lateral face and the third face may be rigidly arranged with respect to each other.

The second lateral face may be non-perpendicular to the third face. The second face may be angled at an angle in a range from 110⁰ to 160⁰, e.g. from 125° to 145⁰, such as at substantially 135° from the third face.

The first and second lateral faces may extend from the third face towards the housing, in use. The first and second lateral faces may form a majority part of the respective lateral opposing lateral outer surfaces of the component. The first and second lateral faces may form at least 60% or at least 75% of the respective lateral opposing lateral outer surfaces of the component.

Any of a group consisting of: the first lateral face, the second lateral face and/or the third face of the mounting component may be able to be a mounting surface that faces a planar external surface in a parallel manner when the component is mounted on the external surface. At least one of a group consisting of: the first lateral face, the second lateral face and the third face of the mounting component may comprise one or more arrangements for receiving a fixing, such as a screw or bolt. For example, the arrangements for receiving a fixing may comprise a recess or thin wall portion of a wall of the mounting component that forms at least one of a group consisting of: the first lateral face, the second lateral face and the third face of the mounting component. At least one of a group consisting of: the first lateral face, the second lateral face and the third face of the mounting component may comprise an adhesive for adhering the mounting component to the external surface. The adhesive may comprise a double sided adhesive pad or tape, contact adhesive, adhesive resin and/or the like. The adhesive may be at least partially covered by a removable release liner. The adhesive may cover a majority, at least 75% or substantively all of the surface of one or more or each of a group consisting of: the first lateral face, the second lateral face and/or the third face.

The mounting component is elongate. The first lateral face is elongate and has a long dimension that extends in parallel with a long dimension of the mounting component. The second lateral face is elongate and has a long dimension that extends in parallel with a long dimension of the mounting component. The long dimension of the second lateral face may extend in parallel with the long dimension of the first lateral face. The lateral direction referred to herein may be a direction that is perpendicular to at least one or each of: the long dimension of the mounting component, the long dimension of the first lateral surface and the long dimension of the second lateral surface.

The mounting component may define an interface surface that abuts a corresponding interface surface of the housing, in use. The interface surface of the mounting component may be symmetrical, e.g. to thereby enable the relative positions of the first and second lateral faces to be reversed. The interface surface of the mounting component may be on an opposite side of the mounting component to the third face. The interface surface of the mounting component may be at least partly defined by distal ends of the first lateral face and the second lateral face.

The interface surface of the mounting component may be symmetric, e.g. may have mirror symmetry. The interface portion may be rectangular or rectangular but for radiused corners when viewed in a plan view.

The asymmetric cross sectional profile through the third face and the first and second lateral faces of the mounting component may be a lateral cross section through the component, e.g. a cross section in a direction that is perpendicular to at least one or each of: the long axis of the mounting component, the long dimension of the first lateral surface and the long dimension of the second lateral surface.

The mounting component may be configured to receive at least part of an internal assembly of the component therewithin. The mounting component may define a recess, which may be configured for receiving at least part of the internal assembly. The first and second lateral faces and the third face may be comprised in external surfaces of walls of the mounting component. The recess of the mounting component may be defined by internal surfaces of the walls of the mounting component in which the first and second lateral faces and the third face are comprised.

A fourth example of the present disclosure, provided only to help understanding of the present disclosure and not within the scope of the invention as defined by the claims, provides a method of mounting the component of the invention or the kit of parts or assembly of the second example or the mounting component of the third example to a planar external surface, the method comprising arranging the component such that one of the group consisting of: the first lateral face, the second lateral face and the third face of the mounting component of the component faces the planar external surface in a parallel manner and fixing the mountable component to the planar external surface.

The fixing of the mounting component to the external surface may comprise adhering one of a group consisting of: the first lateral face, the second lateral face and the third face of the mounting component to the planar external surface via an adhesive. The fixing of the mounting component to the external surface may comprise passing at least one fixing through an arrangement for receiving a fixing, the arrangement for receiving a fixing being provided in one of a group consisting of: the first lateral face, the second lateral face and the third face of the mounting component and into the planar external surface. For example, the arrangement for receiving a fixing may comprise a recess or thin wall portion of a wall of the mounting component that forms at least one of a group consisting of: the first lateral face, the second lateral face and/or the third face of the mounting component.

The method may comprise fixing the mounting component to the external surface without a housing being attached to the mounting component and, after the mounting component is fixed to the external surface, attaching the housing to the mounting component.

A fifth example of the present disclosure, provided only to help understanding of the present disclosure and not within the scope of the invention as defined by the claims, provides a method of assembling the kit of parts of the second example, the method comprising selecting the operating module from amongst a plurality of different operating modules; attaching the housing of the kit of parts to the mounting component of the kit of parts with the operating module coupled to the housing.

A sixth example of the present disclosure, provided only to help understanding of the present disclosure and not within the scope of the invention as defined by the claims, provides a computer program comprising computer executable instructions that, when executed by a processor, cause the processor to control an additive manufacturing apparatus to manufacture the mounting component of the third example or the mounting component of the kit of parts or assembly according to the second example.

A seventh example of the present disclosure, provided only to help understanding of the present disclosure and not within the scope of the invention as defined by the claims, provides a method of manufacturing a product via additive manufacturing, the method comprising: obtaining an electronic file representing a geometry of a product wherein the product is the mounting component according to the third example or the mounting component of the kit of parts or assembly according to the second example; and controlling an additive manufacturing apparatus to manufacture, over one or more additive manufacturing steps, the product according to the geometry specified in the electronic file.

An eighth example of the present disclosure, provided only to help understanding of the present disclosure and not within the scope of the invention as defined by the claims, provides a computer program comprising computer executable instructions that, when executed by a processor, cause the processor to a select instructions from a plurality of sets of instructions stored in a memory to program a processor of the operating unit of the component of the first example so that the operating unit is configured as either a curtain or wide angle PIR.

The processor may be provided on a circuit.

The curtain PIR detector may have a different, e.g. a narrower, field of view in at least one dimension relative to the wide angle PIR. The curtain PIR detector may have an elongated and/or longitudinally extending field of view. The field of view of the curtain PIR may be subtended by an angle of less than 50° in one direction but may be subtended by a greater angle in a perpendicular direction, e.g. an angle of 90° or greater. The field of view of the wide angle PIR may be subtended by angles of 50° or greater in every direction, e.g. subtended by angles in a range from 60⁰ to 130°, e.g. in a range from 100⁰ to 120⁰ in every direction. The curtain PIR may be configured for detecting motion of a living entity through an opening such as a door or window, or through a corridor or passageway. The wide angle PIR may be configured for detecting motion or presence of a living entity in an area of a premises, such as in a room.

A ninth example of the present disclosure, provided only to help understanding of the present disclosure and not within the scope of the invention as defined by the claims, provides a monitoring system comprising one or more components of the first example; and a processing system for receiving and processing outputs of the operating modules of the one or more components in order to determine at least one of: the presence, motion or action of an entity.

The processing system may be remote from the one or more components. The processing system may comprise a communication system for communicating with the one or more components. The communication system may be a wired or wireless communication system. The communication system may be configured to receive the output of the operating modules of the at least one components via wireless communications.

The outputs of the operating modules may be representative of the environmental input received by the component. At least one of the environmental inputs comprises passive infra-red radiation emitted by entities within the field of view of the
component. At least one of the environmental inputs may comprise a tactile input, such as a button push. At least one of the environmental inputs may comprise a magnetic field or a change in magnetic field. At least one of the environmental inputs may comprise an acceleration.

The at least one component may comprise a plurality of components, wherein at least one component is a different type of component to at least one other component. The plurality of components may comprise one or more of the following groups of component types: a wide angle PIR detector, a curtain PIR detector, a push button unit, a sensor for detecting an opening or closing operation, a motion sensor, and/or the like.

### Brief description of the several views of the drawings

Embodiments will now be described by way of example only, and with reference to the accompanying drawings, of which:
Figure 1 is an end view of a component for a monitoring system;
Figure 2 is an opposing end view of the component of Figure 1;
Figure 3 is a lateral side view of the component of Figure 1;
Figure 4 is an opposing lateral side view of the component of Figure 1;
Figure 5 is a front plan view of the component of Figure 1;
Figure 6 is rear plan view of the component of Figure 1;
Figure 7 is a front perspective view of the component of Figure 1;
Figure 8 is a cross sectional view through the component of Figure 1 when viewed from a lateral side of the component;
Figure 9 is an exploded view of a kit of parts of the component of Figure 1;
Figure 10 is a front perspective view of a mounting component of the component of Figure 1;
Figure 11 is a rear perspective view of the mounting component of Figure 10;
Figure 12 is a front planar view of an alternative mounting component of Figure 10;
Figure 13 is a front perspective exploded view of an internal assembly of the component of Figure 1;
Figure 14 is rear perspective view of the internal assembly of Figure 13;
Figure 15 is a planar view of a circuit of the component of Figure 1;
Figure 16 is a side view of the circuit of Figure 15;
Figure 17 is a rear perspective view of a housing of the component of Figure 1;
Figure 18 is a front planar view of the housing of Figure 17;
Figure 19 is a flowchart of a method of installing the component of Figure 1;
Figure 20 is a rear perspective view showing mounting of the mounting component of Figure 10 as part of the method of Figure 19;
Figure 21 is a rear perspective view showing the fixing of an assembly comprising the housing of

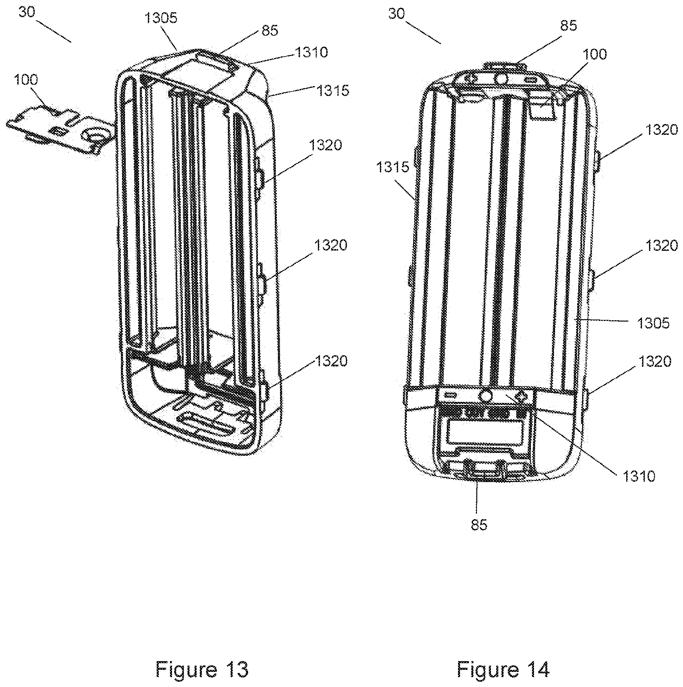

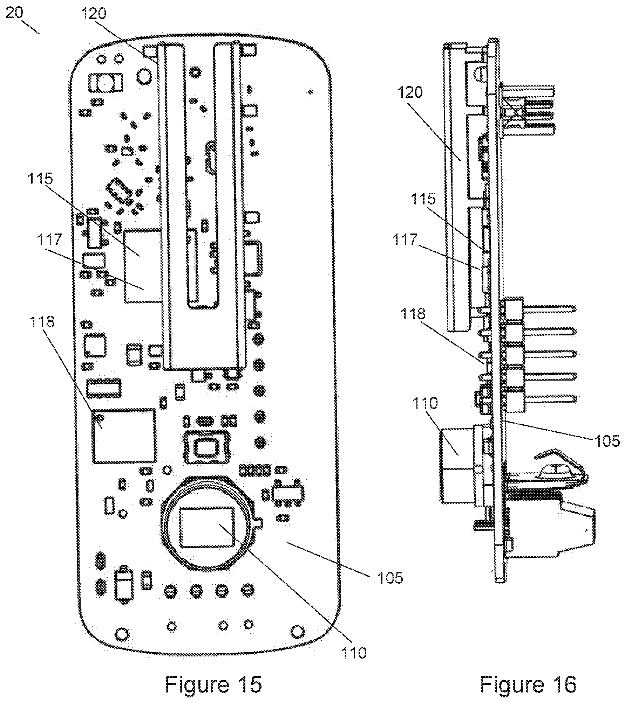

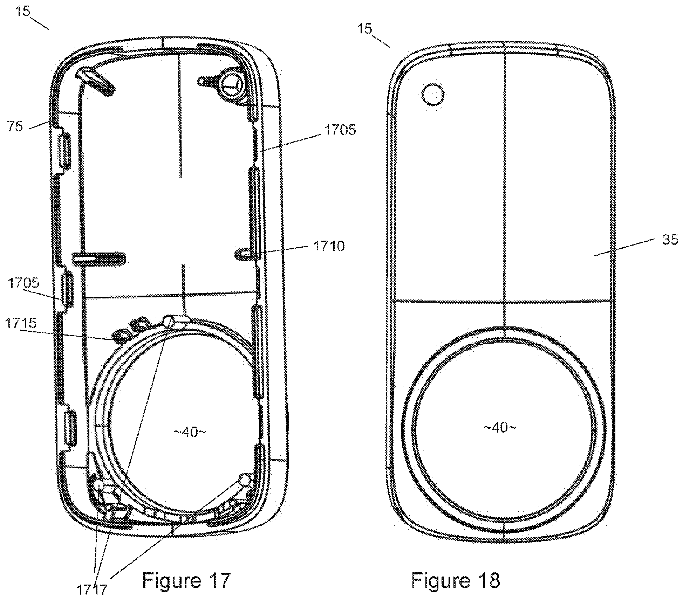

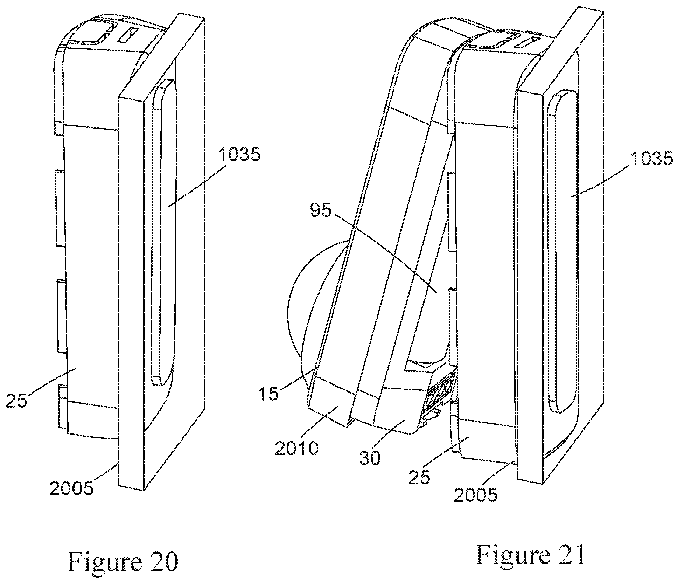

Figure 17, the internal assembly of Figure 13 and the circuit of Figure 15 to the mounting component shown in Figure 20;

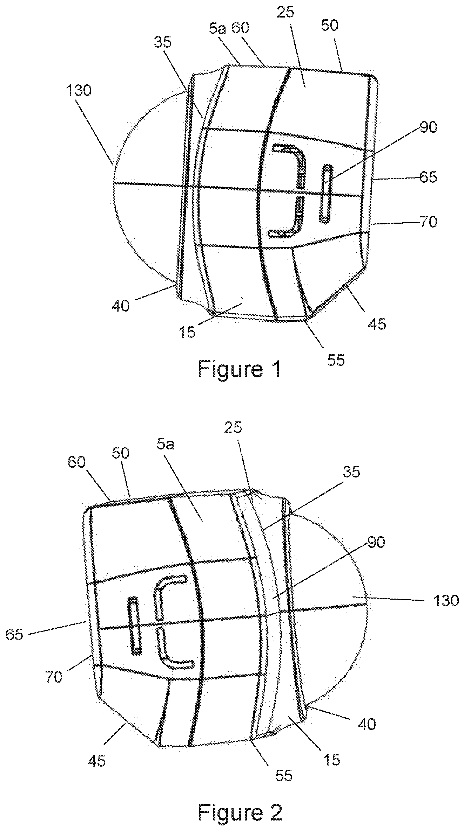

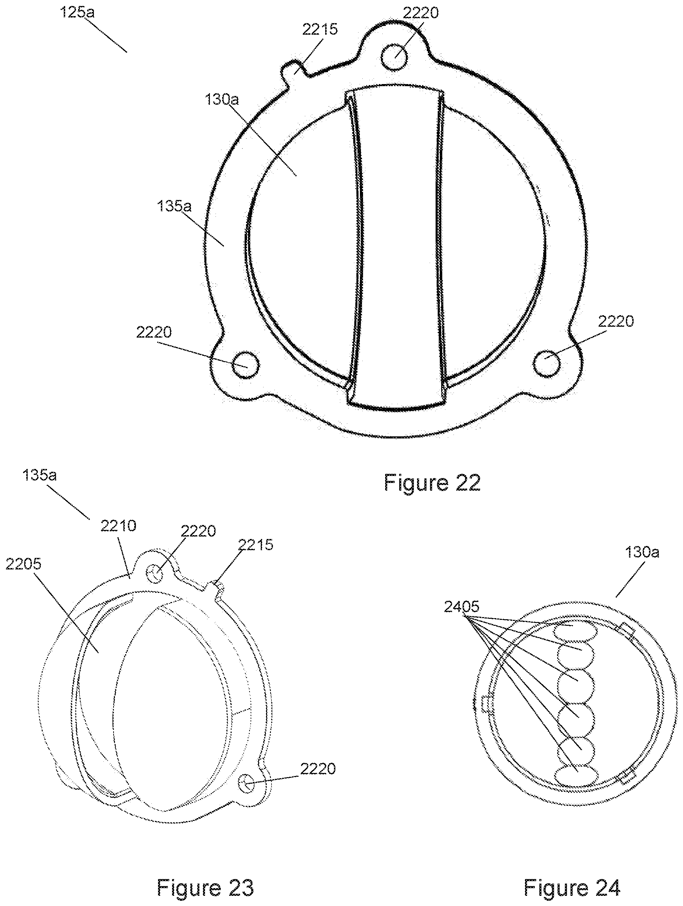

Figure 22 is a rear view of a field of view defining element of the component of Figure 1;
Figure 23 is a front perspective view of a mask of the field of view defining element of Figure 22;
Figure 24 is a planar view of a lens of the field of view defining element of Figure 22;

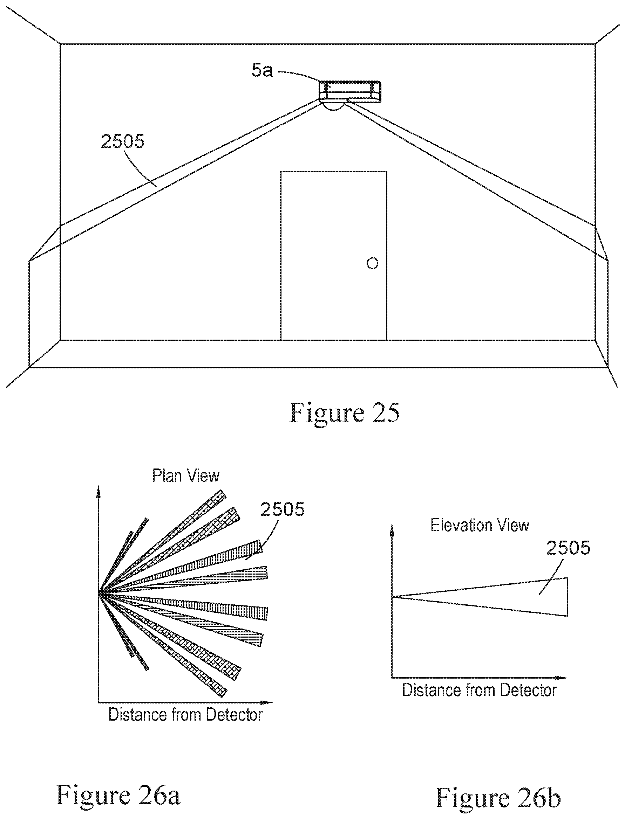

Figure 25 is a perspective view of the component of Figure 1 in use in a room of a premises;
Figures 26a-b are planar and side views respectively of a field of view of the component of Figure 1;

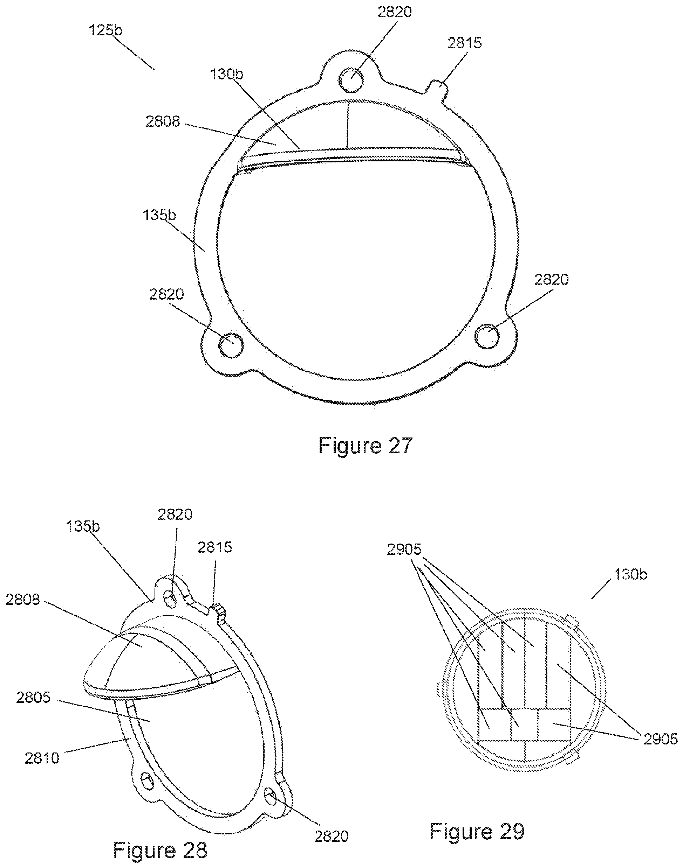

Figure 27 is front planar view of an alternative field of view defining element to that of Figure 22;
Figure 28 is a front perspective view of a mask of the field of view defining element of Figure 27;
Figure 29 is a planar view of a lens of the field of view defining element of Figure 27;

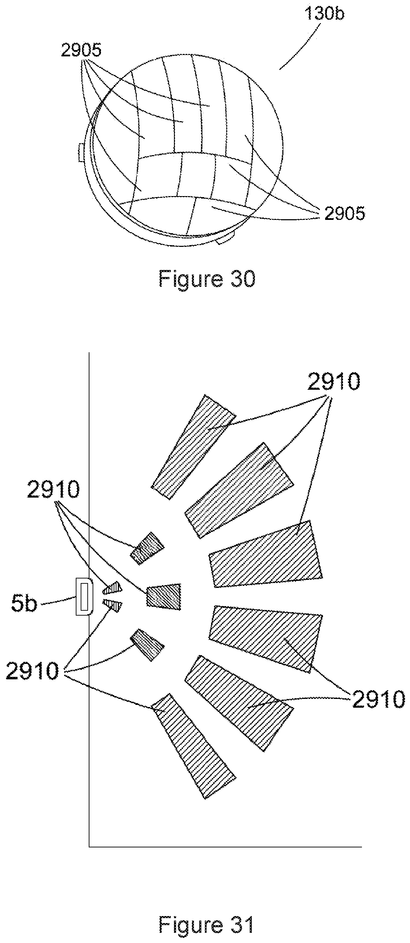

Figure 30 is a front perspective view of the lens of Figure 29;
Figure 31 is a planar view of the field of view of the component of Figure 1 with the alternative field of view defining element of Figure 27 substituted in place of the field of view defining element of Figure 22;

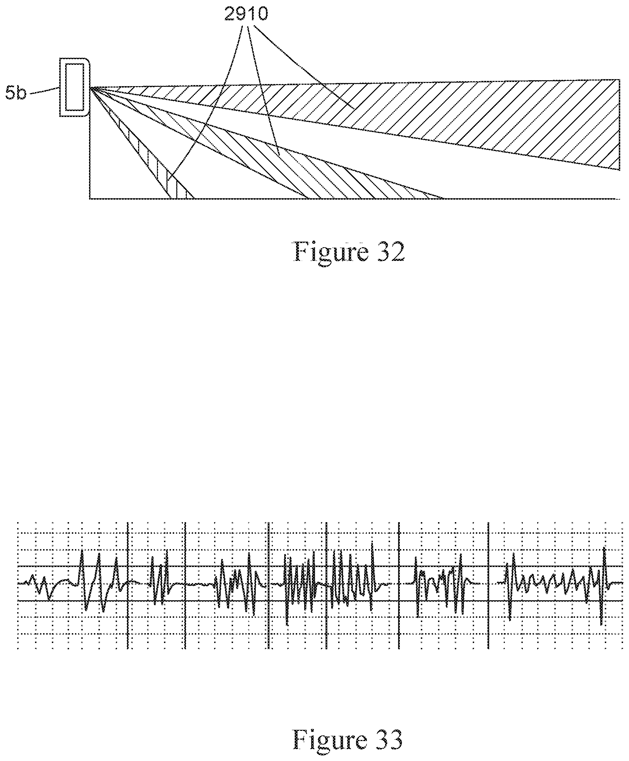

Figure 32 is a side view of the field of view of the component of Figure 1 with the alternative field of view defining element of Figure 27 substituted in place of the field of view defining element of Figure 22;
Figure 33 is an example of a signal produced by the component of Figure 1 with the alternative field of view defining element of Figure 27 substituted in place of the field of view defining element of Figure 22 when a living entity moves through the field of view;

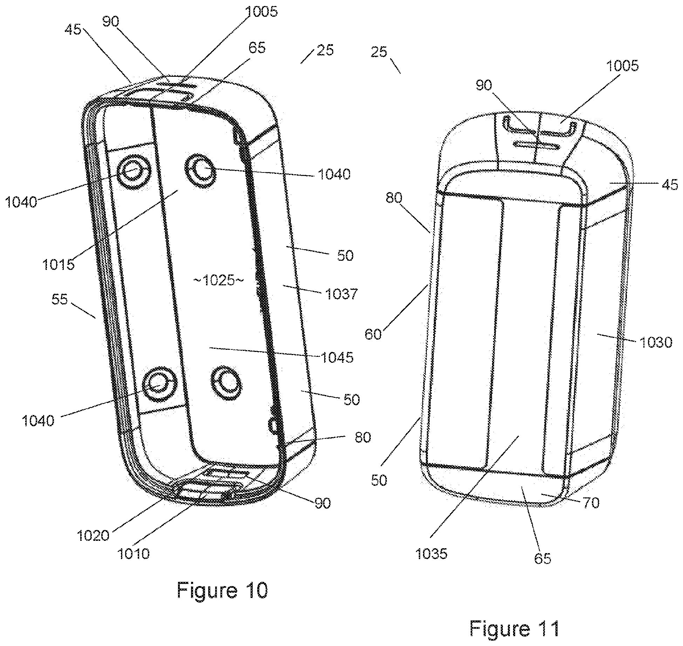

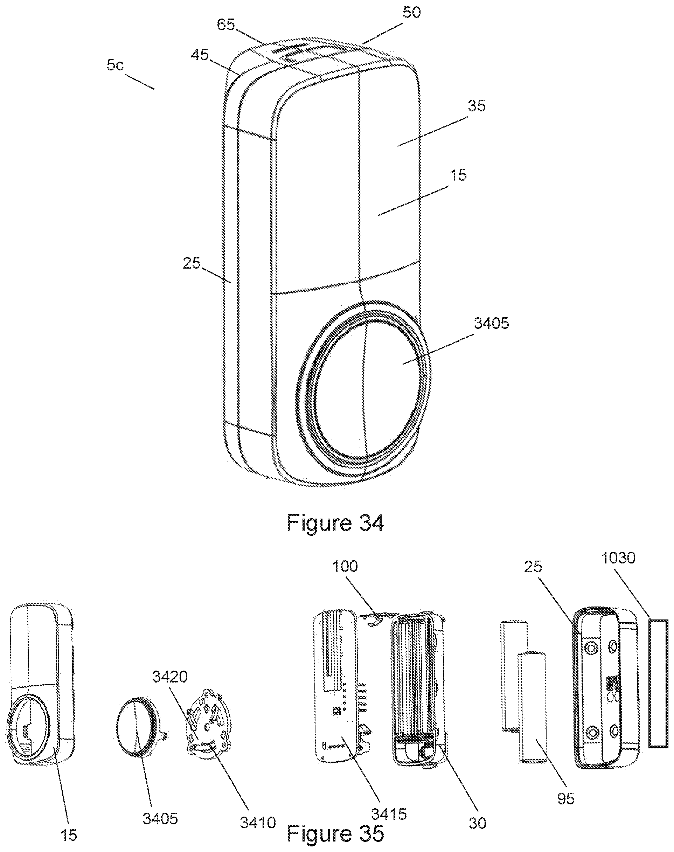

Figure 34 is a perspective view of a different component for a monitoring system, the different component also comprising the mounting component of Figure 10 and the housing of Figure 17;
Figure 35 is an exploded view of a kit of parts for forming the component of Figure 34;

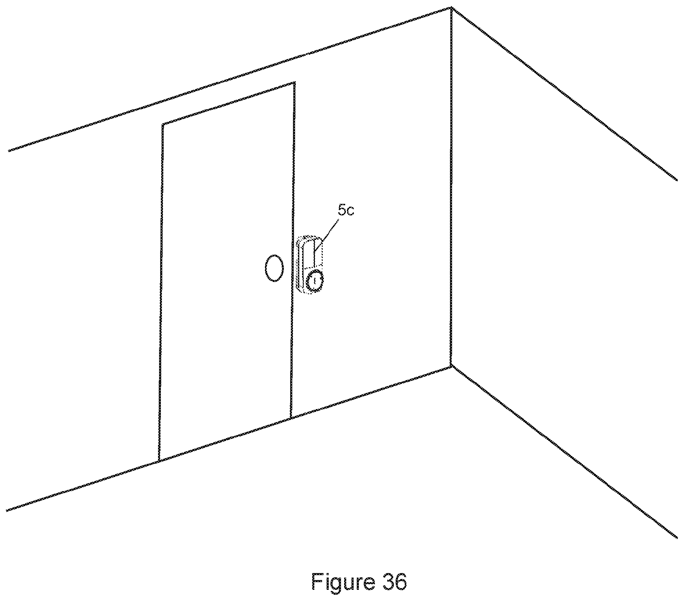

Figure 36 is a perspective view the component of Figure 34 in use in a room of a premises;

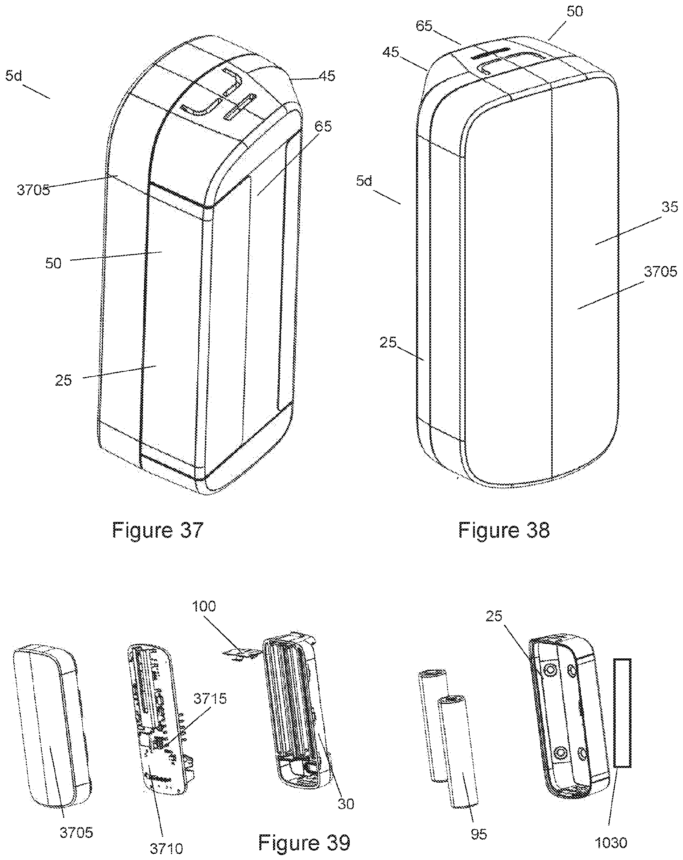

Figure 37 is a rear perspective view of an alternative component for a monitoring system, the alternative component also comprising the mounting component of Figure 10;
Figure 38 is a front perspective view of the component of Figure 37;
Figure 39 is an exploded view of a kit of parts for forming the component of Figure 37;

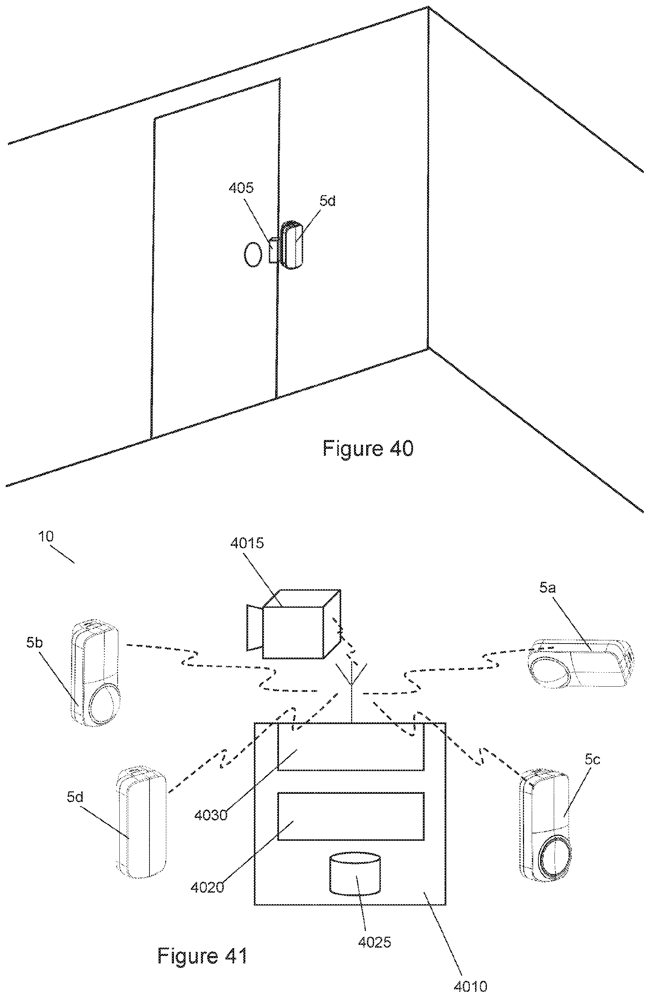

Figure 40 is a perspective view the component of Figure 37 in a room of a premises; and
Figure 41 is a schematic of a monitoring system comprising a plurality of components, which may comprise any of the components of Figures 1, 34 or 37 or any combinations thereof.

### Detailed Description of the Drawings

As used herein, except where the context requires otherwise, the terms "comprises", "includes", "has", and grammatical variants of these terms, are not intended to be exhaustive. They are intended to allow for the possibility of further additives, components, integers or steps.

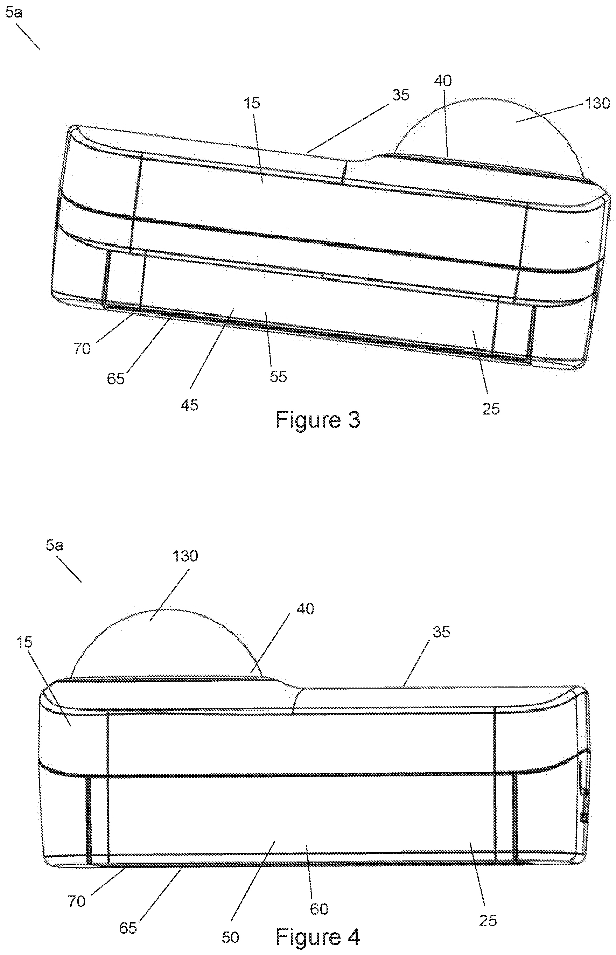

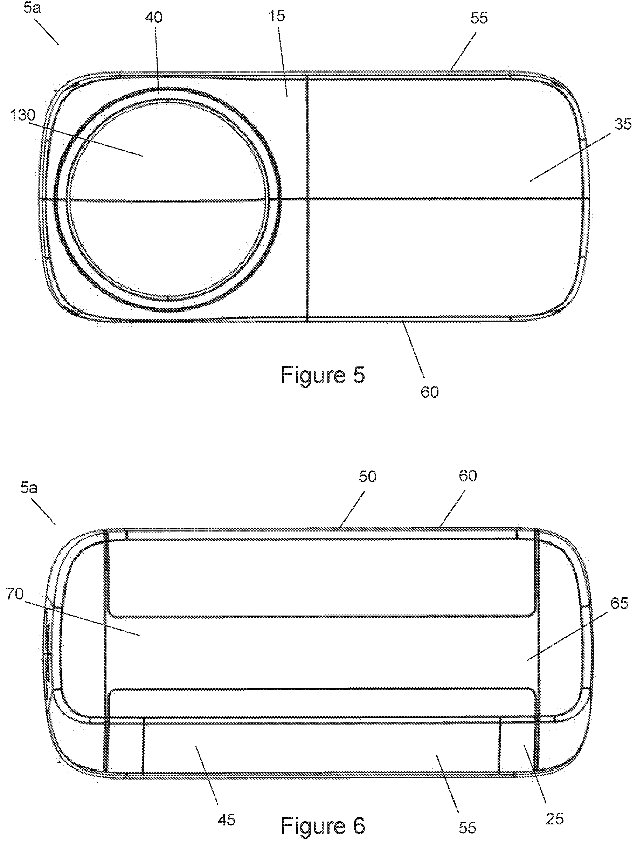

Figures 1 to 8 are schematic illustrations of a component 5a for a monitoring system 10 (see Figure 40). The component 5a is or comprises a passive infra-red detector component for detecting infra-red radiation emitted by entities within its field of view and outputting a signal based thereon, which in the embodiments described herein indicates a detected motion. Although the component 5a may be described as a passive infra-red detector component, in some embodiments it may have additional functions as will be appreciated from the description herein.

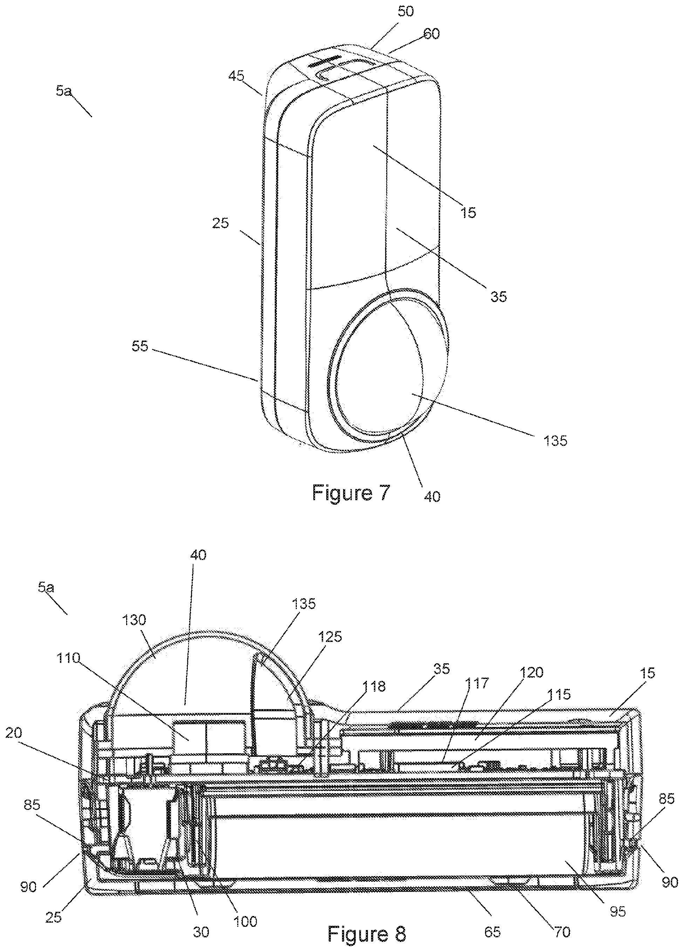

The component 5a comprises a housing 15, an operating module 20 (see Figure 8), a mounting component 25 and an internal assembly 30 (see Figure 8). The housing 15 and the mounting component 25 together accommodate the operating module 20 and the internal assembly 30 within them.

The operating module 20 is configured to receive environmental input, and the environment input is infra-red radiation, but in other embodiments different environmental inputs can additionally be received. The environmental inputs are received at a front 35 of the component 5a formed by an outer surface of the housing 15. In this example, the housing 15 defines an aperture 40 therethrough, which is provided on the front 35 of the component 5a. The environmental input is provided from the exterior of the component 5a through the aperture 40 to the interior of the component 5a where the operating module 20 is located.

The mounting component 25 is configured for mounting the component 5a to a planar external surface, which is generally a wall of or in a building, and for supporting the housing 15, operating module 20 and internal assembly 30 on the external surface. When the component 5a is assembled, the mounting component 25 and the housing 15 together form a closed shell that houses the internal assembly 30 therein. The assembly of the component 5a can be achieved in a variety of possible ways. For example, in the example shown in Figures 1 to 8, the operating module 20 is fixed to the internal assembly 30, which is in turn fixed (either directly or indirectly) to the housing 15. The internal assembly 30 is selectively attachable to, and releasable from, the mounting component 25, e.g. by a snap fit. However, alternative mechanisms such as interference fit, interlocking members, clips and the like could additionally or alternatively, be used. As such, the housing 15 is indirectly fixed to the mounting component 25 via, or at least via, the internal assembly 30. Alternatively, the component 5a can be assembled by forming the closed shell by attaching the housing 15 directly to the mounting component 25, e.g. by a push friction fit connection or by other suitable connection that allows the housing 15 and the mounting component 25 to be selectively separated by pulling apart.

The mounting component 25 comprises first and second lateral faces 45, 50 that form at least part of respective opposing lateral outer surfaces 55, 60 of the component 5a. The mounting component 25 further comprises a third face 65 that forms a rear outer surface 70 of the component 5a. The rear outer surface 70 of the component 5a is an outer surface of the component 5a that is on an opposite side of the component 5a to the front surface 35 that receives the environmental input sensed by the operating module 20. The first and second lateral faces 45, 50 are provided at different angles with respect to a third face 65. The first and second lateral faces 45, 50 are asymmetrically arranged with respect to the third face. That is, the first and second lateral faces 45, 50 are arranged to be mirror asymmetric, i.e. the first and second lateral faces 45, 50 are not mirror images of each other.

In this example, the first lateral face 45 extends perpendicularly to the third face 65, whereas the second lateral face 50 extends at an internal angle of 135° from the third face. In this way, each of the first lateral face 45, second lateral face 50 and third lateral face 65 define planar mounting surfaces that can be used to mount the mounting component 25 against the planar external surface so that one of the first lateral face 45, the second lateral face 50 and the third lateral face 65 faces the planar external surface in a parallel manner when the mountable component 5 is mounted on the external surface.

The different relative angles of the first lateral face 45, the second lateral face 50 and the third lateral face 65 allow the mounting component 25 and thereby the component 5a to be mounted in a range of different orientations. The mounting component 25 can be used for a range of different component types and in components 5a, 5b, 5c and 5d intended for different purposes. As such, an installer and/or manufacturer need carry fewer different types of components or mounting components and has more flexibility in how the component is used. This may result in a component 5a that provides benefits in installation and manufacture.

Figure 8 shows a longitudinal cross section through the component 5a when viewed from one of the lateral sides 55, 60 of the component 5a. The housing 15 is indirectly attached to the mounting component 25 by being secured to the internal assembly 30 that is releasably attached to the mounting component 25. In this example, the internal assembly 30 is securely coupled to the housing 15 by resiliently bendable arms 85 that engage with corresponding attachment mechanisms in the form of slots 90 in the mounting component 25 by a snap fit, but other suitable mechanisms could be used. The housing 15, internal assembly 20 and operating module 20 are all securely coupled together such as they can be released from the mounting component 25 as a single assembly by pushing in the resiliently bendable arms 85 and pulling the housing 15 away from the mounting component 25.

The component 5a is battery powered and the internal assembly 30 is configured to hold at least one battery 95 and associated electrical connections 100. The battery 95 in this example is elongate and the component 5a, first lateral face 45, second lateral face 50 and third face 65 are all elongate. The long axis of the battery 95, component 5, first lateral face 45, second lateral face 50 and third lateral face 65 all extend substantially in parallel.

The operating module 20 comprises a circuit 105 that comprises a passive infra-red (PIR) detector, the PIR detector comprising an IR sensor 110 (such as a pyroelectric IR sensor), a processor 117, memory 118 and a view defining arrangement 125. The processor 117 could comprise one or more chips that may include one or more of: a digital processor such as a microcontroller, microprocessor, field programmable gate array (FPGA), application specific integrated circuit (ASIC) or other processor described herein, or may be provided by one or modules of one or more such chips or their like. Such chips may additionally act as a central processing unit (CPU) of the operating module 20. The PIR may also comprise an analogue processing circuit integrated or distinct from such chips.

The operating module 20 also comprises a communications module 115 for communicating with a processing system 4010 of the monitoring system (see Figure 40). The communications module 115 in this example comprises a wireless antenna 120 for providing wireless communications, but in other examples, cabled communications could be used. The IR sensor 110 faces the aperture 40 in the housing 15 arranged on the front surface 35 of the component 5a so as to receive infra-red radiation therethrough.

The field of view defining arrangement 125 is provided over the IR sensor 110. In this example, the field of view defining arrangement 125 comprises a lens 130 for collecting and focussing infra-red radiation onto the IR sensor 110 and a mask 135 for blocking infra-red radiation beyond a selected range or angles. The lens 130 is a Fresnel lens array that defines a plurality of sub-lens elements 2405 (see Figure 24) or 2905 (Figure 30), each focussing a different distinct and separated portion of the field of view onto the IR sensor 110. In this example, the lens 130 and mask 135 extend through the aperture 40 in the housing 15.

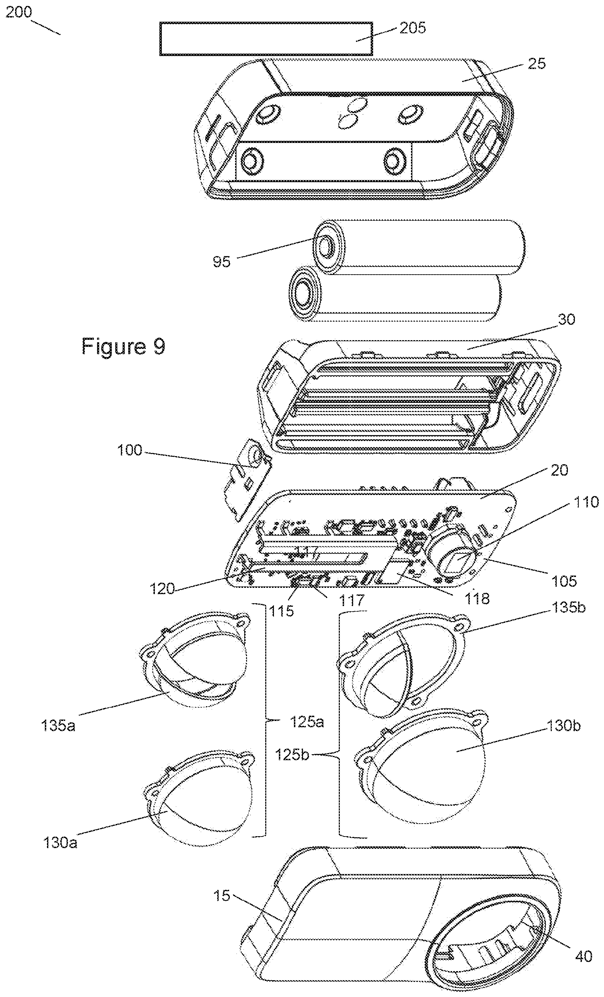

Figure 9 shows an exploded view of a kit of parts 200 for forming the component of Figures 1 to 8. The kit of parts 200 comprises a double sided adhesive pad 205 for fixing to one of: the first lateral surface 45, the second lateral surface 50 or the third lateral surface 65. The kit of parts 200 further comprises the mounting component 25, batteries 95, the internal assembly 30 including the electrical connections 100 for the batteries 95, the circuit 105 that comprises the PIR detector and communications module 115, at least one mask 135a, 135b, at least one lens 130a, 130b and the housing 15. Beneficially, the mask 135a, 135b and lens 130a, 130b can be interchangeable so that the component can be selectively configured or reconfigured for different operations, e.g. a curtain PIR detector and a wide angle PIR detector having different fields of view, by changing the lens 130a, 130b and mask 135a, 135b and optionally by the processor 117 switching between or being reprogrammed with corresponding instruction sets.

The kit of parts shown in Figure 9 allows for modular construction of the components 5a, 5b, wherein different parts shown in Figure 9 can be interchanged with other parts in order to form alternative components. In this example, the component 5a comprises a curtain PIR detector by inclusion of the corresponding mask 135a and lens 130a, and the alternative component 5b (see Figures 31 and 32) is a wide angle PIR detector that is the same as the curtain PIR detector 5a other than the alternative mask 135b and lens 130b are used instead of the mask 135a and lens 130a respectively, and by suitable programming of the processor 117.

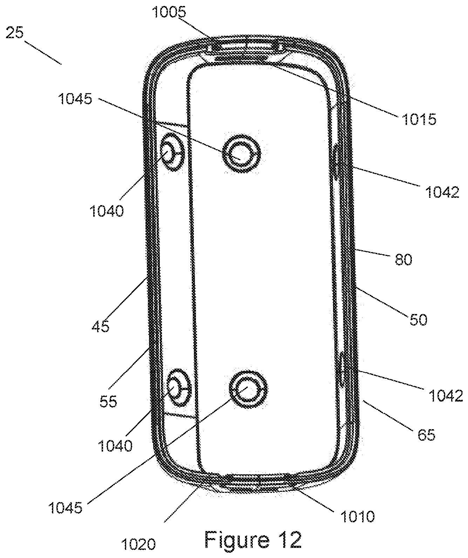

The mounting component 25 is shown in more detail in Figures 10 to 12. The mounting component 25 comprises the first lateral face 45 and the second lateral face 50 extending from opposing edges of the third face 65. The first and second lateral faces 45, 50 and the third face 65 are all planar. First and second end faces 1005. 1010 of the mounting component 25 extend from opposing end edges 1015, 1020 of the third surface and span between respective ends of the first and second lateral faces 45, 50. The mounting component 25 and the first and second lateral faces 45, 50 and the third face 65 are all elongate with long axes that extend generally in parallel, with the first and second end faces 1005, 1010 extending generally perpendicularly to the long axis of the mounting component 25. The first and second lateral faces 45, 50, the third face 65 and the first and second end faces 1005, 1010 are provided on outer sides of respective walls. The inner sides of the walls together define a recess 1025 that receives part of the internal assembly 30 and the at least one battery 95 when the component 5a is assembled. In particular, when assembled, a long axis of the elongate at least one battery 95 extends generally in parallel with the long axes of the mounting component 25, the first and second lateral faces 45, 50 and the third face 65.

As can be seen particularly in Figures 10 and 11, the first lateral face 45 is angled differently with respect to the third face 65 than the second lateral face 50. In this example, the first lateral face 45 is at an internal angle of substantially 135° with respect to the third face 65. The second lateral face 50 is provided at an internal angle of substantially 90° with respect to the third face 65. Any of the first lateral face 45, the second lateral face 50 or the third lateral face 65 are usable as mounting surfaces that face the planar external surface in a parallel manner when the mountable component 25 is mounted on the external surface. In this way, the mountable component 25 and thereby the component 5a can be mounted stably at a variety of orientations with respect to the external surface depending on which of the first lateral face 45, the second lateral face 50 or the third lateral face 65 are used as the mounting surface. This is also more convenient for the installer as they only need to carry one type of mounting component, rather than a different type of mounting component for each required mounting orientation.

At least one mounting mechanism is provided on whichever of the first lateral face 45, the second lateral face 50 and/or the third lateral face 65 that are configured for use as a mounting surface. For example, in the example of Figures 10 and 11 the first lateral face 45, second lateral face 50 and the third face 65 are configured as mounting surfaces and each comprises a first type of mounting mechanism in the form of an adhesive, specifically a double-sided adhesive tape or pad 1030, 1035, 1037 and a second type of mounting mechanism in the form of designated locations 1040, 1042, 1045 for receiving a fixing such as a self-tapping screw The designated locations 1040, 1042, 1045 in the example of Figures 10 to 12 comprise a recess forming a circular thin wall portion for receiving the fixing, but alternatively could take another form such as screw holes. The first lateral face 45, the second lateral face 50 and/or the third lateral face 65 beneficially respectively cover a majority of the lateral outer surfaces 55, 60 and the rear outer surface of the component 5a and the adhesive covers enough of the first lateral face 45, the second lateral face 50 and/or the third lateral face 65 to support the weight of the component on the exterior surface to which it is mounted in use, e.g. the adhesive could cover a majority of the first lateral face 45, the second lateral face 50 or the third lateral face 65.

The mounting component 25 is preferably rigid and could be, for example, formed from rigid plastic, e.g. a moulded plastic component, but optionally could be formed from other materials.

The mounting component 25 comprises the interface surface 80 that extends around edges of the first and second lateral faces 45, 50 and the first and second end faces 1005, 1010 that are furthest from the third face 65. Beneficially, the interface surface 80 is symmetrical, e.g. has at least one plane of mirror symmetry, despite the component having an asymmetric laterally extending cross sectional profile through the first lateral face 45, the second lateral face 50 and/or the third lateral face 65. In the illustrated examples, there are two such planes of mirror symmetry. The plane(s) of mirror symmetry may allow the housing 15 to be attached to the mounting component 25 in either of two relative orientations, the relative orientations being at 180⁰ to each other. This allows a greater freedom in orienting the operating module 20 that is coupled with the housing 15, e.g. to accommodate different mounting orientations achieved by selecting a different surface from the first lateral face 45, the second lateral face 50 and the third lateral face 65 as the mounting surface. In other embodiments, the ability to orient the housing 15 to the mounting component 25 in a plurality of different orientations, for example orientations at 180⁰ relative to each other, may be achieved in any other way known to the person skilled in the art.

The mounting component 25, in this example the end faces 1005, 1010 of the mounting component 25, are provided with attachment sites 90 for attaching to the housing 15 or internal assembly 30. In this example, the attachment sites 90 are in the form of slots for receiving engaging arms 85 (see Figures 13 and 14) of the internal assembly 30, but are not limited to this.

Figures 13 and 14 show the internal assembly 30. The internal assembly 30 is elongate to match the elongate mounting component 25 and elongate housing 15. The elongate internal assembly 30 is configured to hold the at least one battery 95 such that the long axis of the at least one battery 95 is parallel to the long axis of the internal assembly 30 and also to the long axis of the component 5a once assembled. The internal assembly 30 also comprises the electrical connections 100 to the battery 95.

The internal assembly 30 is configured to be securely coupled to the housing 15 via some suitable coupling arrangement 1320, in this case engaging flanges distributed around an edge of the lateral sides 1305, 1315 of the internal assembly.

The internal assembly 30 in this example is also configured to releasably attach the mounting component 25. In this example, the internal assembly 30 comprises resiliently bendable arms 85 that engage with the attachment sites 90, e.g. slots, in the housing component 25 when the component 5a is assembled to attach the internal assembly 30, and thereby the housing 15, to the mounting component 25. The internal assembly 30, and thereby the housing 15, can then be released from the mounting component 25 by pushing back and bending the resiliently bendable arms 85 to release them from the attachment sites 90, i.e. slots, in the mounting component 25.

Figures 15 and 16 show the operating module 20, which in this example comprises the passive infra red (PIR) detector and the communications module 115 arranged in a circuit 105. As noted above, the passive infra-red (PIR) detector comprises the IR sensor 110, the processor 117 and memory 118. The communications module 115 in this example is a wireless communications module configured for wireless communications with a remote processing system 4010 (see Figure 40) and comprises a wireless antenna 120.

The circuit 105 connects to the electrical connections to the battery 100 to receive power therefrom. The circuit 105 is configured so as to be securely mountable to the internal assembly 30 and the housing 15 by any suitable means. The circuit 105 is elongate to fit inside the component 5a, inside an internal space defined by the housing 15 and mounting component 25. The IR sensor 110 is arranged to face the aperture 40 of the housing 15 when the component 5a is assembled so as to be able to receive infra-red radiation therethrough.

Figures 17 and 18 show the housing 15 that defines the aperture 40 therein. The housing is elongate, with the housing 15 being arranged such that a long axis of the housing 15 extends in parallel with the long axis of the mounting component 25 when the component 5a is assembled.

The housing 15 comprises the interface surface 75 that extends around a perimeter of the housing 15. The interface surface 75 of the housing 15 is configured to attach with the corresponding interface surface 80 of the mounting component 25, optionally in a friction fit when the component 5a is assembled. In this regard, the interface surface 75 of the housing is mirror symmetrical in at least one axis (preferably two axes) of symmetry to allow the housing 15 to be selectively attached to the mounting component 25 in either of two orientations that are rotated 180° from each other.

The housing 15 also comprises couplings 1705, in this example in the form of flanges, for engaging with the coupling arrangement 1320 of the internal assembly 30 so as to secure the internal assembly 30 to the housing 15 with the operating module 20 and particularly the circuit 105 sandwiched therebetween. In this way the housing 15, the internal assembly 30 that holds the batteries 95 and the operating module 20 can be provided as a single assembly that can be selectively attached to and released from the mounting component as a single unit. This makes the component 5a easier to assemble and makes it easier to change the batteries 95, and to do so without affecting the mounting of the mounting component 25 against the external surface.

The housing comprises locating members 1710 such as ribs or protrusions for locating the circuit 105 and thereby the IR sensor 110 relative to the housing 15 and particularly so that the IR sensor 110 on the circuit 105 is located so as to face the aperture 40 of the housing 15.

The part of the housing 15 that forms the periphery of the aperture 40 is also provided with a locating arrangement 1715, such as a slot, or ribs/protrusions, for engaging with corresponding arrangements 2815 (see Figures 17 and 28) on the mask 135b so as to secure the mask 135b and lens 130b in a correct orientation in the aperture 40 of the housing 15. The part of the housing 15 that forms the periphery of the aperture 40 is also provided with a plurality of posts 1717 (in this example three posts 1717). The posts 1717 can engage with corresponding holes in the mask 135b so as to locate and provide the required rotational angle of the mask 135b and lens 130b in the aperture 40.

The housing, like the mounting component 25, can be formed from a rigid polymeric material, such as a moulded plastic material, but other materials could be used.

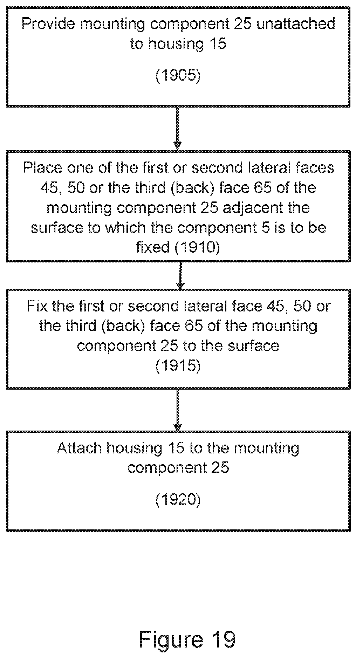

A process for mounting the component on an external surface 2005 (see Figures 20 and 21) is illustrated in Figures 19 to 21.

In step 1905, the mounting component 25 is provided without the housing 15, internal assembly 30 or operating component 20 attached.

In step 1910, one of the first or second lateral faces 45, 50 or the third face 65 of the mounting component 25 is selected to be the mounting surface. If applicable, the double sided adhesive pad 1030, 1035 is affixed to the selected mounting surface, or a release liner is pealed off the selected adhesive pad 1030, 1035 if the adhesive pad 1030, 1035 is already in place. Additionally or alternatively, screws can be driven through the designated locations 1040, 1045 of the selected mounting surface. The selected mounting surface (e.g. one of the first or second lateral faces 45, 50 or the third (back) face 65 of the mounting component 25) is placed so as to face in a parallel manner and be immediately adjacent the external surface 2005 to which the component 5a is to be fixed.

In step 1915, the selected mounting surface is fixed to the external surface 2005, e.g. by pushing the adhesive pad 1030, 1035 onto the external surface 2005 or by screwing the screws through the designated locations 1040, 1045 into the external surface 2005. The mounting component 25 is now fixed to the external surface 2005, as shown in Figure 20.

Once the mounting component 25 has been fixed to the external surface 2005, then an assembly 2010 comprising the housing 15, the operating module 20 and the internal assembly 30 secured together to form the combined assembly 2010 is attached to the mounting component 25. For example, the assembly 2010 can be attached to the mounting component by engaging the resiliently bendable arms 85 of the internal assembly 30 with the attachment sites 90, e.g. slots, in the mounting component 25 and optionally by friction fit engagement between the interface surfaces 75, 80 of the housing 15 and the mounting component 25, as shown in Figure 21.

It will be appreciated that the combination of the mounting component 25 that allows the component 5a to be securely mounted to the external surface 2005 in a range of different orientations and the provision of the mounting component 25, housing 15, operating module 20 and internal assembly 30 as separate parts that can be fixed or releasably coupled together allows for a modular component that can have its constituent parts easily changed in order to provide different types or configurations of component.

One example of this modular approach is selecting or interchanging the lens 130 and mask 135 for use with common mounting components 25, housings 15, operating module 20 and internal assembly 30 so selectively provide either a component that is a curtain PIR detector component or a wide angle PIR detector component.

An example of a field of view defining arrangement 125a that defines a field of view for a curtain PIR is shown in Figures 22 to 24. The field of view defining arrangement 125a comprises a lens 130a for a curtain PIR and a mask 135a for a curtain PIR. Curtain PIRs generally have a very elongate field of view that is relatively narrow in one dimension and relatively wide in another direction. For example, the angular extent of the field of view in one dimension could be less than 20°, e.g. around 10°, wherein the angular extent of the field of view on the perpendicular dimension may be more than three times as large, e.g. greater than 65°. A curtain PIR is generally used to detect living entities passing through openings such as a door, window or a passageway or corridor opening, where the wide dimension of field of view spans the width of the opening.

Figure 22 shows a plan view from the front of the field of view defining arrangement 125a, Figure 23 shows a perspective view of the mask 135a and Figure 24 shows a front plan view of the lens 130a.

The mask defines an elongate slot 2205 that, when the mask is inserted into the aperture 40 of housing 15, extends over substantially a full diameter of the aperture 40. The mask 135a is generally dome shaped and defines the slot 2205 with a rim 2210 around. The rim is sized to engage the part of the mounting 15 that extends around the periphery of the aperture 40. The rim 2210 comprises locating protrusions 2215 for locating the mask 135a at a desired angle in the aperture 40. The rim 2210 also comprises fixing parts 2220, such as fixing holes for receiving the posts 1717 shown in Fig. 17 to fix the mask 135a to the housing 15 and to provide the correct rotation angle of the mask 135a.

Figure 24 shows the lens 130a for the curtain PIR. The lens 130a is a Fresnel lens array, comprising a linearly distributed plurality of lens sub-elements 2405, each configured to separately focus infra-red radiation onto the IR sensor 110. In this way, each lens sub-element 2405 defines a portion of a field of view of the PIR detector. The linear distribution of lens sub-elements 2405 corresponds with the slot 2205 in the mask 135a so that the lens sub-elements 2405 and the slot 2205 in the mask 135a together define the elongated curtain PIR field of view.

The processor 117 of the operating module 20 is configured or reconfigured to provide processing of the IR sensor 110 signal appropriate for operation of the component 5a as or comprising a curtain PIR component.

An example of the component 5a configured as a curtain PIR with the lens 130a and mask 135a is shown in Figure 25. It can be seen from this that the component 5a configured as a curtain PIR component has a very wide field of view 2505 across the width of a door, for example, having an angle subtending the field of view 2505 in the elongate direction of the slot 2205 of the mask 135a and the direction in which the lens sub-elements 2405 of the lens 130a are distributed that is 65° or higher. In contrast, the field of view 2505 of the curtain PIR configured component 5a perpendicular to the long axis of the slot 2205 and the direction in which the lens sub-elements 2405 are distributed, is much less, e.g. in the range from 5° to 20°, such as substantially 10°. This narrower field of view 2505 direction extends in the in-out direction of the door, in use.

When being used in a curtain PIR application, such as that shown in Figure 25, the IR sensor 110 and the lens 130 preferably face downwards over the sensing area from above. In this case, depending on the application, the component 5a can be mounted using the second lateral face 50 of the mounting component 25 (which is at 90⁰ to the third face 65) to a wall that is directly above and in the same plane as the door or other opening (or potential opening) so that the field of view 2505 of the PIR detector faces down and across the doorway, like a curtain over the doorway. Alternatively, the component 5a could be mounted using the third face 65 to the ceiling directly above the doorway so that the field of view 2505 faces downwardly from the ceiling and across the doorway, like a curtain over the doorway. As such, the mounting component 25 advantageously provides a range of mounting possibilities, thereby making it easier to install.

The distribution of the field of view 2505 in the curtain PIR configuration of the component is shown in Figures 26(a) and (b). Figure 26(a) shows an exemplary distribution of the field of view 2505 in the long axis of the slot 2205 in the mask 135a and in the direction in which the lens sub-elements 2405 of the lens 130a are distributed. It will be appreciated that the effective range of the component 5a shown in Figures 26(a) and (b) represents the limit at which detection performance is guaranteed to be within the specification for the detector. In practice, the effective range of the component 5a will depend on the situation being monitored at the time, e.g. the size of an object, the amount and temperature of heat radiated by it, the speed in which it moves, and the ambient temperature. The overall field of view 2505 in this example is subtended by an angle of 118° and is divided into a plurality of separated portions of field of view, each defined by a separate lens sub-element 2405. Figure 26(b) shows the distribution of the field of view in the direction perpendicular to the long axis of the slot 2205 in the mask 135a and the direction in which the lens sub-elements 2405 of the lens 130a are distributed. In this example, the overall field of view is much narrower and subtended by an angle of only 11° and comprises a single continuous field of view, as there is no distribution of lens sub-elements 2405 in this direction.

In keeping with the modular arrangement of the component 5a, the component 5a can be selectively configured or reconfigured into a wide angle PIR detector component 5b by selecting and installing a wide angle field of view defining arrangement 125b as shown in Figure 27 instead of the curtain PIR field of view defining element 125a of Figure 22 and by reconfiguring the electronics (e.g. a transfer function) to be for a wide angle PIR instead of a curtain PIR. The mounting component 25, the housing 15, the internal assembly 30 and the operating module 20 are otherwise the same between the two configurations. However, in some embodiments, the processor 117 of the operating module 20 is configured or reprogrammed to provide processing of the IR sensor 110 signal appropriate for operation of the component as a wide angle PIR component, for example by changing the PIR detector's detection threshold and/or gain transfer function.

A mask 135b of the wide angle PIR field of view defining arrangement 125b is shown in Figure 28. This differs from the curtain PIR mask 135a in that an opening 2805 of the mask extends around at least half of the mask 135b such that the mask 135b is only configured to cover a portion at the top of the aperture 40 and thereby a portion at the top of the field of view of the PIR detector. The portion at the top is in reference to when the component 5a mounted for use as a wide angle PIR detector. This is achieved by the mask 135b comprising an opaque shroud 2808 that extends outwardly from around a portion of the perimeter of the opening 2805, and covers part of the opening 2805. The mask 135b also comprises a rim 2810, locating protrusions 2815 and fixing parts 2820, similar to those of curtain PIR mask 135a.

As shown in Figures 29 and 30, the lens 130b of the wide angle field of view PIR is also a Fresnel lens array but has lens sub-elements 2905 distributed in two dimensions. The lens sub-elements 2905 at the bottom of the lens, in use, may be differently sized and distributed to those at the centre and top, to provide for different sensing closer to the component 5b than further away, whereby when mounted, more horizontal angles correspond to further distances. However, in other examples a different field of view defining arrangement could be used. An example of such an alternative arrangement comprises a cylindrical lens, wherein the long axis of the cylinder is parallel to the long axis of the mounting component.

Figure 31 shows the field of view of the component 5b configured as a wide angle PIR detector in a top / plan view. The overall field of view spans a wide angle, in this example 120°, and also defines a series of discrete portions 2910 of the field of view, each discrete portion 2910 of the field of view being defined by a different lens sub-element 2905. As shown in figure 31, these discrete portions 2910 of the field of view are distributed laterally when viewed from above. As can be seen from Figures 31 and 32, the discrete portions 2910 of the field of view are also distributed vertically when viewed from a side, in contrast to the curtain PIR configuration shown in Figure 26(b). Although not shown as such in figure 31, each portion 2910 may comprise a plurality (e.g. a pair or more) of adjacent sub-portions, like shown in Figure 26, each sub-portion corresponding to a respective pyroelectric sensing element of the PIR detector. Again, the effective range of the component 5b shown in Figure 26 is the limit at which detection performance is guaranteed to be within the specification for the detector as, in practice, the effective range of the component 5b depends on the situation being monitored at the time.

By using a Fresnel lens array that comprises a plurality of lens sub-elements 2905, a more distinctive position sensitive signal is obtained from the PIR detector when a living entity moves through the field of view. An example of such a signal is shown in Figure 33, each segment in that figure showing the signal resulting from movement of a living entity at a different distance from the lens.

When used as a wide-angle PIR detector component 5b, it is desirable in some situations to mount the component 5b at a junction between two walls so that the IR sensor 110 faces at 45° to both walls. In this arrangement, the component is mounted to one of the walls via the first lateral face 45 of the mounting component so that the IR sensor 110 faces at 45° to both walls. Since the interface surfaces 75, 80 of the housing 15 and mounting component 25 are both mirror symmetrical, the first lateral surface 45 of the mounting component 25 could be mounted to either wall and the housing 15 can still be connected to the mounting component 25 the correct way up regardless of which way round the mounting component 25 is with respect to the housing 15. In this way, the first lateral face 45 can be mounted to either wall, e.g. to allow the installer to connect the component 5b to the wall with best access. In this way, a single common mounting component 25 can be used to mount the components 5a, acting as a curtain PIR, and 5b, acting as a wide angle PIR. In particular, for component 5a, the third face 65 may be mounted to the ceiling, or the second lateral face 50 may be mounted to a vertical wall. In either case, a vertical curtain-like field of view covering a potential entry point may be produced. As will be appreciated, the first lateral face 45 is generally not useful in arranging the component 5a to have such a field of view. For component 5b, on the other hand, third face 65 may be mounted against a vertical wall around the middle of a room; or the first lateral face 45 may be mounted to a wall at a right-angle junction of two walls, In either case, a wide-angle field of view suitable for monitoring the room may be produced. As will be appreciated, the second lateral face 50 is generally not suited for arranging the component 5b to have such a field of view.

However, the modular concept described above extends beyond selecting or interchanging lenses 130 and masks 135. Figures 34 and 35 show a component 5c that shares the housing 15, mounting component 25 and internal assembly 30 with the component 5a of Figures 1 to 9, but is a push button component rather than a PIR detector component. For example, the component 5c may be configured as an emergency button for raising an alarm, an operating button for turning the monitoring system on or off or for toggling between operating modes, or the like.

The push button component 5c differs from the PIR detector components 5a, 5b in that the push button component comprises a push button 3405 that is accessible through the aperture 40 in the housing 15 instead of the lens 130 and mask 135, comprises a push button mechanism 3410 for translating motion of the push button 3405 into an input to circuit 3415 and comprising a button biasing arrangement 3420 for biasing the push button 3405 into an non-activated part of its range of motion. The circuit 3415 is provided instead of the circuit 105 in the component 5a of Figures 1 to 9. The circuit 3415 of the push button configuration component 5c comprises electronics for sending a signal responsive to pushing of the push button 3405 instead of the PIR detector. However, the form factor of the circuit 3415 and the other components of the circuit, such as the wireless communications module 115 including antenna 120, processor 117 and memory 118 are optionally the same as circuit 105.

In this way, the push button configuration component 5c can be mounted at a variety of angles and to a variety of surface types, depending on the specific application, without changing the mounting component 25. Furthermore, the same parts may be used in multiple different types of component 5a, 5b, 5c of the monitoring system, which may be beneficial to installer, manufacturers and stockists.

An example of an application of the push button configuration component 5c is shown in Figure 36, wherein the push button configuration component 5c is mounted to or at a door frame via the third face 65 of the mounting component 25 to face the room in which it is mounted.

Figures 37 to 40 show another configuration of component 5d that is operable as an open-close sensor. It may be mounted to or at a door frame via the third face 65 of the mounting component 25 as shown in Figure 40 with a corresponding magnet 405 mounted on the door. The open-close sensor configuration component 5d has the same mounting component 25 and internal assembly 30 in common with the PIR components 5a, 5b and the push button configuration component 5c described above. However, the housing 3705 and the operating module differ.

The housing 3705 of the open-close sensor configuration component 5d is similar in many respects to the housing 15 of the PIR components 5a, 5b and push button component 5c but lacks the aperture 40 and as such has a much flatter front surface.

The operating module 3710 comprises a circuit 3715 that, similarly to the circuits 105 and 3415 described above comprises a wireless communications module 115 including an antenna 120, a processor 117 and a memory 118 but lacks a PIR detector or push button components and instead comprises one or more open-close sensors 3715 such as a sensor selected from a group comprising: a magnetic field sensor for detecting a magnetic field from an external magnet, an electromagnetic sensor or an optical sensor. With such a type of an open/close sensor, a part which provides a signal to be sensed in the "closed" configuration may be provided in a part that is separate from part 5d, for example to be placed on a door/window, while the part 5d is placed in the door/window frame. With such an arrangement the device 5a can act as both an open-close sensor and a curtain PIR with field of view directed across the door/window; and device 5b can act as both an open-close sensor and a wide-angle PIR to view the room from the door/window frame.

In the example where the open-close sensor 3715 comprises a magnetic field sensor, the component 5d is mounted on one part of an opening such as a door or door frame or a window or window frame, and the magnet is mounted on another part of the opening, such as another of the door, door frame, window or window such that opening or closing of the opening (e.g. door or window) results in relative motion of the component 5d and the magnet, which in turns results in detectable changes in the magnetic field sensed by the magnetic field sensor.

In this example, it can be beneficial to have the magnet arranged close to the magnetic field sensor in the component 5d. As such, the ability to securely mount the component 5d in a range of orientations due to the differently angled first and second lateral faces 45, 50 with respect to the third face 65 can be particularly beneficial in achieving the required relative positioning of magnet and component 5d in this application.

In another example, the open-close sensor 3715 comprises one or more accelerometers, wherein the component 5d is mounted on the opening such that motion of the opening due to opening or closing results in a detectable signal from the accelerometers. In other examples, the one or more accelerometers may be used to detect one or more or mechanical shock and vibration.

Figure 41 is a schematic of a monitoring system 10 that comprises a plurality of different types of components 5a, 5b, 5c, 5d for monitoring environmental inputs to the components. The monitoring system 10 in this example is a security monitoring system that monitors for intruders and raises an alarm when set responsive to detection of presence or motion of a living entity. The monitoring system 10 may be part of a system that has other functions in addition to monitoring, such as effecting environmental controls such as heating, lighting, etc.

The monitoring system 10 comprises a processing system 4010 for receiving and processing outputs of the operating modules 20, 3710 of the components 5a, 5b, 5c, 5d in order to determine at least one of: presence, motion or an action of a living entity. That is, the processing system 4010 may be configured to receive signals indicative of motion or presence of a living entity inside a room from the component 5b configured as the wide angle PIR motion detector. The processing system 4010 may be configured to receive signals indicative of a living entity entering through a doorway, window, passage or corridor from the component 5a configured as a curtain PIR detector. The processing system 4010 may be configured to receive signals indicative of a door or window opening or closing from the component 5d configured as an open-close sensor. The processing system 4010 may be configured to receive signals indicative of the pushing of a button from the component 5c configured as a push button unit.

In the example shown, the processing system 4010 is configured to communicate wirelessly with the components 5a, 5b, 5c, 5d and with an alarm sounder 4015. However, in other examples, communications may be wired or over electrical or optical cables.

The processing system 4010 comprises a processing resource which comprises at least one processor, memory 4025 and a communications module 4030, such as a wireless communications module for communicating with the components 5a, 5b, 5c, 5d and with the alarm sounder 4015. The communications module 4030 is also configured for sending electronic alerts.

The processing system 4010 is programmed to take an action responsive to one or more or any of these signals. Examples of actions could include signalling the alarm sounder 4015 to produce an alarm sound, send an electronic alert message to an owner, a monitoring company, law-enforcement, or the like, record an event in an electronic log, or the like.

Whilst the foregoing description has described exemplary embodiments, it will be understood by those skilled in the art that many variations of the embodiments can be made within the scope of the present invention as defined by the claims. Moreover, features of one or more embodiments may be mixed and matched with features of one or more other embodiments.

References to a processor made herein may comprise one or more processors to perform functions of the invention by operating on input data and generating output. Such a processor may be a programmable processor executing a computer program to perform those functions and/or the hardware design of the processor may itself configure the processor to perform the functions. Processors suitable for the execution of a computer program include microprocessors (including but not limited to microprocessors designed as central processing units) and, microcontrollers, graphics processing units (GPUs), maths co-processors, tensor processing units and the like. References to a processor made herein may comprise special purpose logic circuitry, such as an FPGA (field programmable gate array), an ASIC (application-specific integrated circuit), analogue processing circuitry or other customised circuitry, which optionally may be provided discrete and/or integrated components. Generally, a program-executing processor will receive instructions and data from a read-only memory or a random access memory or both. The processor and memory may be comprised in a computing device and also include, or be operatively coupled to receive data from or transfer data to, or both, one or more mass storage devices for storing data, e.g. magnetic, magneto-optical disks, or optical disks. Information carriers suitable for embodying computer program instructions and data include all forms of non-volatile memory, including by way of example semiconductor memory devices, e.g. EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry. The communications module described herein may be configured for local communications, or remote and/or wide area communications, e.g. over a network such as an Ethernet network, a cellular communications network, the internet or the like. The communication module may be configured for wired, cabled and/or other physically connected communications. The communication module may be configured for wireless communications, e.g. using 3G, 4G, 5G, Wi-Fi, Bluetooth, ZigBee, proprietary wireless protocols, and/or the like.

## Claims

1. An infrared-detecting component (5a) that detects infra-red radiation emitted by entities within a field of view of the infrared-detecting component, the infra-red detecting component (5a) being for use in a monitoring system (10), the infrared-detecting component (5a) comprising:
a passive infra-red, PIR, detector (110) with the field of view;
a housing (15) for housing an operating module (20) comprising the PIR detector (110) for sensing an environmental input received via a front of the infrared-detecting component (5a); and
a mounting component (25) for mounting the infrared-detecting component (110) and supporting the housing (15); wherein
the mounting component (25) is elongate and comprises first and second lateral faces (45, 50) that are elongate and respective long dimensions of the first and second lateral faces (45, 50) extend in parallel with a long dimension of the mounting component (25), the first and second lateral faces (45, 50) forming at least part of respective opposing lateral outer surfaces of the infrared-detecting component (5a) and are provided at different angles with respect to a third face (65) of the mounting component (25) so as to be asymmetrically arranged with respect to the third face (65), the first and second lateral faces (45, 50) and the third face (65) being planar, the third face (65) forming at least part of a rear outer surface of the infrared-detecting component (5a) that is an outer surface of the component (5a) that is on an opposite side of the component to the front of the infrared-detecting component (5a) that receives the environmental input that is sensed by the PIR detector (110).

2. The infrared-detecting component (5a) according to claim 1, wherein the first lateral face (45) is arranged substantially perpendicular to the third face (65) and the second lateral face (50) is non-perpendicular to the third face (65).

3. The infrared-detecting component (5a) according to claim 2, wherein the first lateral face (45) is angled at substantively 90° from the third face (65) and the second lateral face is angled at substantively 135° from the third face (65).

4. The infrared-detecting component (5a) according to any preceding claim, wherein any one of a group consisting of: the first lateral face (45), the second lateral face (50) and the third face (65) of the mounting component (25) is able to be a mounting surface facing a planar external surface in a parallel manner when the mountable component (5a) is mounted on the external surface.

5. The infrared-detecting component (5a) according to any preceding claim, wherein the first lateral face (45) and the second lateral face (50) comprise a majority of the area of the respective opposing lateral outer surfaces of the infrared-detecting component (5a).

6. The infrared-detecting component (5a) according to any preceding claim, wherein at least one of a group consisting of: the first lateral face (45), the second lateral face (50) and the third face (65) of the mounting component (25) comprises an adhesive for adhering the mounting component (25) to the external surface.

7. The infrared-detecting component (5a) according to any preceding claim, configured to accommodate elongate batteries (95) such that a long dimension of the batteries (95) extends in parallel with the long axis of the mounting component (25).

8. The infrared-detecting component (5a) according to claim 7, comprising an internal assembly (30) that holds the operating module (20) and the batteries (95), wherein the internal assembly (30) is coupled to the housing (15) such that the operating module (20) is removable from the mounting component (25) by removing the housing (15).

9. The infrared-detecting component (5a) according to any preceding claim, wherein the mounting component (25) and the housing (15) are rearrangeable relative to each other such that the relative positions of the first and second lateral faces (45, 50) are reversible.

10. The infrared-detecting component (5a) according to any preceding claim, wherein the mounting component (25) comprises an interface surface (80) that abuts a corresponding interface surface (75) of the housing (15), in use, and the interface surfaces (80, 75) of the mounting component (25) and the housing (15) are each symmetrical to thereby enable the relative positions of the first and second lateral faces (45, 50) to be reversed.

11. The infrared-detecting component (5a) of any preceding claim, wherein the PIR detector is a wide angle PIR sensor.

12. The infrared-detecting component (5a) of any preceding claim, comprising at least one field of view defining element that at least partly defines the field of view of the PIR detector, and the at least one field of view element comprises one or both of: a Fresnel lens configured to focus infra-red radiation onto the PIR detector or a mask for masking part of the PIR detector.

13. The infrared-detecting component (5a) of any preceding claim, wherein the operating module is interchangeable with the same housing or by interchanging the housing and operating module, the infrared-detecting component being reconfigurable between comprising a curtain PIR detector and comprising a wide angle PIR detector.

14. The infrared-detecting component (5a) of any preceding claim, wherein the component is reconfigurable between comprising a curtain PIR detector and comprising a wide angle PIR detector by one or both of: interchanging the at least one field of view defining element or interchanging the operating module, wherein the curtain PIR detector has a different field of view to the wide angle PIR detector.

15. The infrared-detecting component (5a) of any preceding claim, wherein the mounting component has an asymmetric cross sectional profile through the third face and the first and second lateral faces,
the asymmetric cross sectional profile through the third face and the first and second lateral faces being a lateral cross section through the infrared-detecting component, the lateral cross section through the component being a cross section in a direction that is perpendicular to at least one or each of: the long dimension of the infrared-detecting component, the long axis of the mounting component, the long dimension of the first lateral surface and the long dimension of the second lateral surface.

## Patentansprüche

1. Infrarot-Erfassungskomponente (5a), welche von Objekten ausgestrahlte Infrarotstrahlung innerhalb eines Sichtfelds der Infrarot-Erfassungskomponente erfasst, wobei die Infrarot-Erfassungskomponente (5a) zur Verwendung in einem Überwachungssystem (10) vorgesehen ist, wobei die Infrarot-Erfassungskomponente (5a) umfasst:
einen passiven Infrarot-, PIR-Detektor (110) mit dem Sichtfeld;
ein Gehäuse (15) zum Aufnehmen eines Betriebsmoduls (20), welches den PIR-Detektor (110) zum Erkennen eines Umgebungssignals umfasst, welches über eine Vorderseite der Infrarot-Erfassungskomponente (5a) empfangen wird; und
eine Montagekomponente (25) zum Montieren der Infrarot-Erfassungskomponente (110) und zum Tragen des Gehäuses (15); wobei
die Montagekomponente (25) länglich ist und erste und zweite Seitenflächen (45, 50) umfasst, welche länglich sind, wobei Längsabmessungen der ersten und der zweiten Seitenfläche (45, 50) jeweils parallel zu einer Längsabmessung der Montagekomponente (25) verlaufen, die erste und die zweite Seitenfläche (45, 50) zumindest einen Teil von jeweils gegenüberliegenden seitlichen Außenflächen der Infrarot-Erfassungskomponente (5a) bilden und in unterschiedlichen Winkeln in Bezug auf eine dritte Fläche (65) der Montagekomponente (25) bereitgestellt sind, sodass sie in Bezug auf die dritte Fläche (65) asymmetrisch angeordnet sind, die erste und die zweite Seitenflächen (45, 50) und die dritte Fläche (65) eben sind, die dritte Fläche (65) zumindest einen Teil einer hinteren Außenfläche der Infrarot-Erfassungskomponente (5a) bildet, welche eine Außenfläche der Komponente (5a) ist, welche sich bezüglich der Vorderseite der Infrarot-Erfassungskomponente (5a), welche die von dem PIR-Detektor (110) erfassten Umgebungseingabe empfängt, auf einer gegenüberliegenden Seite der Komponente befindet.

2. Infrarot-Erfassungskomponente (5a) nach Anspruch 1, wobei die erste Seitenfläche (45) im Wesentlichen senkrecht zu der dritten Fläche (65) angeordnet ist und die zweite Seitenfläche (50) nicht senkrecht zu der dritten Fläche (65) ist.

3. Infrarot-Erfassungskomponente (5a) nach Anspruch 2, wobei die erste Seitenfläche (45) im Wesentlichen um 90° von der dritten Fläche (65) abgewinkelt ist und die zweite Seitenfläche im Wesentlichen um 135° von der dritten Fläche (65) abgewinkelt ist.

4. Infrarot-Erfassungskomponente (5a) nach einem vorstehenden Anspruch, wobei eine aus einer Gruppe, bestehend aus der ersten Seitenfläche (45), der zweiten Seitenfläche (50) und der dritten Fläche (65) der Montagekomponente (25), eine Montagefläche sein kann, welche einer ebenen Außenfläche auf parallele Weise zugewandt ist, wenn die montierbare Komponente (5a) auf der Außenfläche montiert ist.

5. Infrarot-Erfassungskomponente (5a) nach einem vorstehenden Anspruch, wobei die erste Seitenfläche (45) und die zweite Seitenfläche (50) einen Großteil der Fläche der jeweils gegenüberliegenden seitlichen Außenflächen der Infrarot-Erfassungskomponente (5a) umfassen.

6. Infrarot-Erfassungskomponente (5a) nach einem vorstehenden Anspruch, wobei zumindest eine aus einer Gruppe, bestehend aus der ersten Seitenfläche (45), der zweiten Seitenfläche (50) und der dritten Fläche (65) der Montagekomponente (25), einen Klebstoff zum Ankleben der Montagekomponente (25) an der Außenfläche umfasst.

7. Infrarot-Erfassungskomponente (5a) nach einem vorstehenden Anspruch, welche dazu konfiguriert ist, längliche Batterien (95) aufzunehmen, sodass sich eine Längsabmessung der Batterien (95) parallel zu der Längsachse der Montagekomponente (25) erstreckt.

8. Infrarot-Erfassungskomponente (5a) nach Anspruch 7, umfassend eine interne Anordnung (30), welche das Betriebsmodul (20) und die Batterien (95) umfasst, wobei die interne Anordnung (30) mit dem Gehäuse (15) so gekoppelt ist, dass das Betriebsmodul (20) durch Entfernen des Gehäuses (15) von der Montagekomponente (25) abgenommen werden kann.

9. Infrarot-Erfassungskomponente (5a) nach einem vorstehenden Anspruch, wobei die Montagekomponente (25) und das Gehäuse (15) relativ zueinander so neu angeordnet werden können, dass die relative Positionen der ersten und der zweiten Seitenfläche (45, 50) umkehrbar sind.

10. Infrarot-Erfassungskomponente (5a) nach einem vorstehenden Anspruch, wobei die Montagekomponente (25) eine Grenzfläche (80) umfasst, welche im Gebrauch an eine entsprechende Grenzfläche (75) des Gehäuses (15) anstößt, und die Grenzflächen (80, 75) der Montagekomponente (25) und des Gehäuses (15) jeweils symmetrisch sind, um dadurch zu ermöglichen, dass die relativen Positionen der ersten und der zweiten Seitenfläche (45, 50) umgekehrt werden können.

11. Infrarot-Erfassungskomponente (5a) nach einem vorstehenden Anspruch, wobei der PIR-Detektor ein Weitwinkel-PIR-Sensor ist.

12. Infrarot-Erfassungskomponente (5a) nach einem vorstehenden Anspruch, umfassend zumindest ein ein Sichtfeld definierendes Element, welches das Sichtfeld des PIR-Detektors zumindest teilweise definiert, und das zumindest eine Sichtfeldelement eines oder beides von einer Fresnel-Linse, welche dazu konfiguriert ist, Infrarotstrahlung auf den PIR-Detektor zu fokussieren, oder einer Maske zum Abdecken eines Teils des PIR-Detektors umfasst.

13. Infrarot-Erfassungskomponente (5a) nach einem vorstehenden Anspruch, wobei das Betriebsmodul mit demselben Gehäuse oder durch Austauschen des Gehäuses und des Betriebsmodul austauschbar ist, wobei die Infrarot-Erfassungskomponente zwischen einen Vorhang-PIR-Detektor umfassend und einen Weitwinkel-PIR-Detektor umfassend neu konfigurierbar ist.

14. Infrarot-Erfassungskomponente (5a) nach einem vorstehenden Anspruch, wobei die Komponente durch eines oder beides von Austauschen des zumindest einen ein Sichtfeld definierenden Elements oder Austauschen des Betriebsmoduls zwischen einen Vorhang-PIR-Detektor umfassend und einen Weitwinkel-PIR-Detektor umfassend neu konfigurierbar ist, wobei der Vorhang-PIR-Detektor ein vom Weitwinkel-PIR-Detektor verschiedenes Sichtfeld aufweist.

15. Infrarot-Erfassungskomponente (5a) nach einem vorstehenden Anspruch, wobei die Montagekomponente ein asymmetrisches Querschnittsprofil durch die dritte Fläche und die erste und die zweite Seitenfläche aufweist,
das asymmetrische Querschnittsprofil durch die dritte Fläche und die erste und die zweite Seitenfläche ein seitlicher Querschnitt durch die Infrarot-Erfassungskomponente ist, wobei der seitliche Querschnitt durch die Komponente ein Querschnitt in einer Richtung ist, welche senkrecht zu zumindest einem von der Längsabmessung der Infrarot-Erfassungskomponente, der Längsachse der Montagekomponente, der Längsabmessung der ersten Seitenfläche und der Längsabmessung der zweiten Seitenfläche ist.

## Revendications

1. Composant de détection infrarouge (5a) qui détecte le rayonnement infrarouge émis par des entités dans un champ de vision du composant de détection infrarouge, le composant de détection infrarouge (5a) étant destiné à être utilisé dans un système de surveillance (10), le composant de détection infrarouge (5a) comprenant :
un détecteur infrarouge passif, PIR (110) avec le champ de vision ;
un boîtier (15) destiné à loger un module de fonctionnement (20) comprenant le détecteur PIR (110) pour détecter une entrée environnementale reçue via une face avant du composant de détection infrarouge (5a) ; et
un composant de montage (25) destiné à monter le composant de détection infrarouge (110) et à soutenir le boîtier (15) ; dans lequel
le composant de montage (25) est allongé et comprend des première et deuxième faces latérales (45, 50) qui sont allongées et des dimensions longitudinales respectives des première et deuxième faces latérales (45, 50) s'étendent en parallèle à une dimension longitudinale du composant de montage (25), les première et deuxième faces latérales (45, 50) faisant au moins partie des surfaces latérales extérieures opposées respectives du composant de détection infrarouge (5a) et sont disposées selon des angles différents par rapport à une troisième face (65) du composant de montage (25), de manière à être agencées de manière asymétrique par rapport à la troisième face (65), les première et deuxième faces latérales (45, 50) et la troisième face (65) étant planes, la troisième face (65) faisant au moins partie d'une surface extérieure arrière du composant de détection infrarouge (5a) qui est une surface extérieure du composant (5a) qui est sur un côté opposé du composant à la face avant du composant de détection infrarouge (5a) qui reçoit l'entrée environnementale qui est détectée par le détecteur PIR (110).

2. Composant de détection infrarouge (5a) selon la revendication 1, dans lequel la première face latérale (45) est agencée sensiblement perpendiculairement à la troisième face (65) et la deuxième face latérale (50) n'est pas perpendiculaire à la troisième face (65).

3. Composant de détection infrarouge (5a) selon la revendication 2, dans lequel la première face latérale (45) est inclinée à sensiblement 90° par rapport à la troisième face (65) et la deuxième face latérale est inclinée à sensiblement 135° par rapport à la troisième face (65).

4. Composant de détection infrarouge (5a) selon une quelconque revendication précédente, dans lequel l'une quelconque parmi un groupe consistant en : la première face latérale (45), la deuxième face latérale (50) et la troisième face (65) du composant de montage (25) peut être une surface de montage faisant face à une surface externe plane de manière parallèle lorsque le composant montable (5a) est monté sur la surface externe.

5. Composant de détection infrarouge (5a) selon une quelconque revendication précédente, dans lequel la première face latérale (45) et la deuxième face latérale (50) comprennent la majeure partie de la zone des surfaces latérales extérieures opposées respectives du composant de détection infrarouge (5a).

6. Composant de détection infrarouge (5a) selon une quelconque revendication précédente, dans lequel au moins l'une parmi un groupe consistant en : la première face latérale (45), la deuxième face latérale (50) et la troisième face (65) du composant de montage (25) comprend un adhésif pour fixer le composant de montage (25) à la surface externe.

7. Composant de détection infrarouge (5a) selon une quelconque revendication précédente, configuré pour accueillir des batteries allongées (95) de telle sorte qu'une dimension longitudinale des batteries (95) s'étende parallèlement à l'axe longitudinal du composant de montage (25).

8. Composant de détection infrarouge (5a) selon la revendication 7, comprenant un ensemble interne (30) qui contient le module de fonctionnement (20) et les batteries (95), dans lequel l'ensemble interne (30) est couplé au boîtier (15) de telle sorte que le module de fonctionnement (20) peut être retiré du composant de montage (25) en retirant le boîtier (15).

9. Composant de détection infrarouge (5a) selon une quelconque revendication précédente, dans lequel le composant de montage (25) et le boîtier (15) sont réorganisables l'un par rapport à l'autre de telle sorte que les positions relatives des première et deuxième faces latérales (45, 50) soient réversibles.

10. Composant de détection infrarouge (5a) selon une quelconque revendication précédente, dans lequel le composant de montage (25) comprend une surface d'interface (80) qui vient en butée contre une surface d'interface (75) correspondante du boîtier (15), en utilisation, et les surfaces d'interface (80, 75) du composant de montage (25) et du boîtier (15) sont chacune symétriques pour permettre ainsi d'inverser les positions relatives des première et deuxième faces latérales (45, 50).

11. Composant de détection infrarouge (5a) selon une quelconque revendication précédente, dans lequel le détecteur PIR est un capteur PIR grand angle.

12. Composant de détection infrarouge (5a) selon une quelconque revendication précédente, comprenant au moins un élément de définition de champ de vision qui définit au moins partiellement le champ de vision du détecteur PIR, et le au moins un élément de champ de vision comprend un ou les deux éléments parmi : une lentille de Fresnel configurée pour concentrer le rayonnement infrarouge sur le détecteur PIR ou un masque pour masquer une partie du détecteur PIR.

13. Composant de détection infrarouge (5a) selon une quelconque revendication précédente, dans lequel le module de fonctionnement est interchangeable avec le même boîtier ou en interchangeant le boîtier et le module de fonctionnement, le composant de détection infrarouge étant reconfigurable entre comprenant un détecteur PIR rideau et comprenant un détecteur PIR grand angle.

14. Composant de détection infrarouge (5a) selon une quelconque revendication précédente, dans lequel le composant est reconfigurable entre comprenant un détecteur PIR rideau et comprenant un détecteur PIR grand angle par l'une ou les deux opérations parmi : interchanger le au moins un élément définissant le champ de vision ou interchanger le module de fonctionnement, dans lequel le détecteur PIR rideau présente un champ de vision différent de celui du détecteur PIR grand angle.

15. Composant de détection infrarouge (5a) selon une quelconque revendication précédente, dans lequel le composant de montage présente un profil de section transversale asymétrique à travers la troisième face et les première et deuxième faces latérales,
le profil de section transversale asymétrique à travers la troisième face et les première et deuxième faces latérales étant une section transversale latérale à travers le composant de détection infrarouge, la section transversale latérale à travers le composant étant une section transversale dans une direction qui est perpendiculaire à au moins l'une ou chacune parmi : la dimension longitudinale du composant de détection infrarouge, l'axe longitudinal du composant de montage, la dimension longitudinale de la première surface latérale et la dimension longitudinale de la deuxième surface latérale.
